(19) Europäisches Patentamt
European Patent Office
Office européen des brevets

(11) EP 0 702 247 B1

## (12) EUROPEAN PATENT SPECIFICATION

(45) Date of publication and mention
of the grant of the patent:
**24.11.2004 Bulletin 2004/48**

(51) Int Cl.⁷: $G01S\ 15/89$, $A61B\ 8/12$, $G01S\ 7/52$, $G10K\ 11/34$

(21) Application number: **95306207.2**

(22) Date of filing: **06.09.1995**

(54) **Ultrasonic visualisation method and apparatus**

Verfahren und Gerät zur Sichtbarmachung von Ultraschall

Méthode et appareil pour visualisation ultrasonique

(84) Designated Contracting States:
**AT BE CH DE ES FR GB IT LI NL**

(30) Priority: **23.12.1994 GB 9426191**
**15.09.1994 GB 9418630**
**30.09.1994 GB 9419778**

(43) Date of publication of application:
**20.03.1996 Bulletin 1996/12**

(73) Proprietor: **INTRAVASCULAR RESEARCH LIMITED**
**London SW15 2NQ (GB)**

(72) Inventors:
• **Barlow, Christopher John**
  **Etobicoke, Ontario M9W 6HU (CA)**
• **Dickinson, Robert Julian**
  **London SW11 6HU (GB)**

• **Hamilton, Robin**
  **Fort William PH33 6HS (GB)**
• **Kelley, Derek**
  **Herts, WD6 2EL (GB)**
• **Kitney, Richard Ian**
  **Fulham, London SW6 5LU (GB)**
• **Ryan, Patrick Joseph**
  **Thames Ditton Surrey KT7 0LU (GB)**
• **Wicks, David Andrew**
  **Woking, Surrey GU22 7DG (GB)**

(74) Representative: **Prins, Adrianus Willem et al**
**Vereenigde**
**Postbus 87930**
**2508 DH Den Haag (NL)**

(56) References cited:
EP-A- 0 017 383      EP-A- 0 293 773
GB-A- 2 208 138      US-A- 4 180 790
US-A- 4 973 111      US-A- 5 329 930

EP 0 702 247 B1

## Description

The present invention relates to an ultrasonic visualisation method and apparatus and is particularly useful in obtaining intravascular ultrasonic images. There is disclosed in our UK Patent Nos 2,208,138; 2,212,267 and 2,246,632, systems for producing intravascular ultrasonic images and the present invention is concerned with providing various improvements to those systems.

Intravascular ultrasound is gaining acceptance as a clinical tool in the diagnosis and treatment of coronary artery disease. The technical problem of forming an image from an ultrasound transducer mounted at the tip of a catheter having a diameter of typically 1mm has led to two distinct approaches. First there are catheters with a single rotating transducer. These are capable of producing high quality images but suffer from image distortion due to vibration of the tip and non-uniform rotation of the transducer, problems caused by the long, flexible rotating drive shaft. The other approach is to have a multi-element transducer. As there are no moving parts this design does not suffer from the image distortions of the rotational approach, but has hitherto suffered from poor image quality due to an inability to perform the beamforming satisfactorily. This invention is concerned with multi-element transducers, and concerns a new approach to the beamforming problem, which will give high quality images.

Using multi-element transducers to form high-quality ultrasound images is well understood in external ultrasound. The usual method is to transmit on a group of elements, with the excitation signal to each element having an appropriate time delay so that the transmitted acoustic field is focused at a particular point in the field. After this excitation, the signal received on each element of the subgroup is appropriately delayed prior to summation to focus the receive field response a specific range from the transducer. The set of delays can be altered during the echo period so that the receive focus is appropriate for the instantaneous echo-range, a technique called dynamic focus.

This approach can generate images with narrow point spread functions and low sidelobe levels. However the hardware architectures it demands are not possible within the millimetre size constraints of catheter based ultrasound. The need to separately address several elements at once means either the provision of a separate cable to each element, or significant beamforming circuitry incorporating the delays closely connected to the elements positioned at the transducer head. Neither of these approaches can be provided in the space permitted.

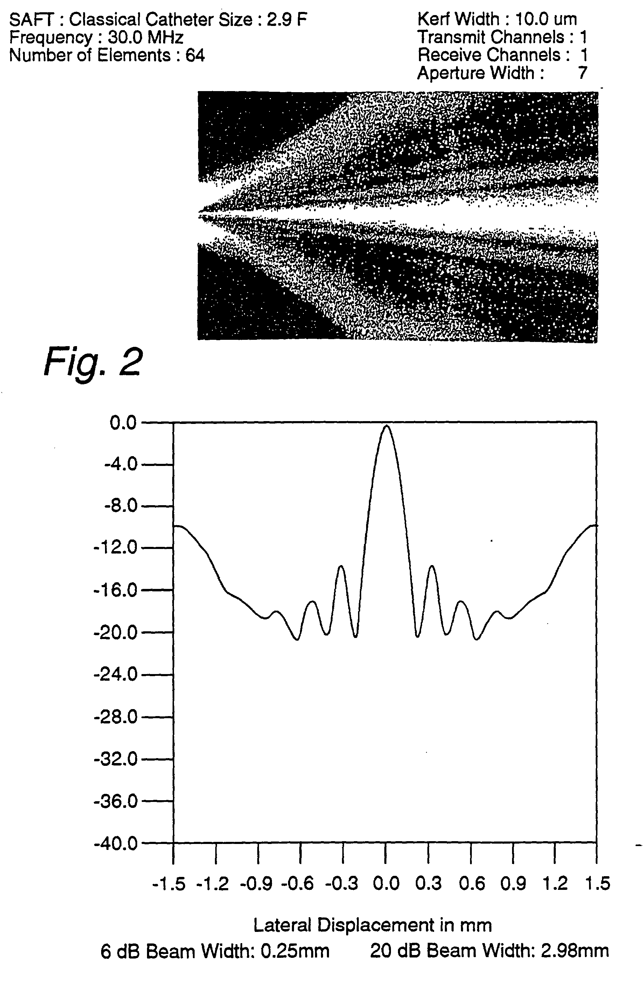

The limited space available does permit a limited number of signal cables and a simple multiplexer arrangement. Such an architecture permits the use of simple synthetic aperture techniques such as those disclosed in US Patent No 4,917,097 (Proudian/Endosonics). In this technique transmit-receive signals from individual elements are obtained sequentially, stored in memory and then post-processed by a synthetic aperture algorithm which includes the time delays required to focus the data. This technique has the limitation that the dynamic range, defined as the signal ratio between the signal peak and the side-lobes outside the main beam, is too low for high-quality grey-scale imaging. (see Figure 2)

A further disadvantage of this technique is that for reduction of side lobes the pitch of the elements has to approach one-half wavelength which is very expensive to achieve. At a frequency of 30MHz, this means the elements have to be separated by twenty three microns, and one hundred and twenty eight are needed for a 1mm diameter catheter. The micro-engineering of such a large number of elements and the associated interconnection problems would make such a design expensive. This approach has the additional disadvantages that the acoustic response of such small elements has low sensitivity, and the electrical impedance of the elements is high, creating difficulties in efficient electrical matching to the transmit and receive circuitry.

To overcome this O'Donnell has described an alternative synthetic aperture approach, in which groups of adjacent elements are connected together to create a group-element. (See O'Donnell and Thomas L J "Efficient Synthetic Aperture Imaging from a Circular Aperture with possible application to Catheter-Based Imaging" IEEE Trans Ultrasonic, SU-39, 3,366-380,1992) Electronic rotation is performed by successively connecting in a new element on one end of the array, and disconnecting one on the other end. This has the advantage that the group-element has a lower electrical impedance and has greater acoustic sensitivity than a single element but it still requires a large number of elements to give good quality beam-profiles.

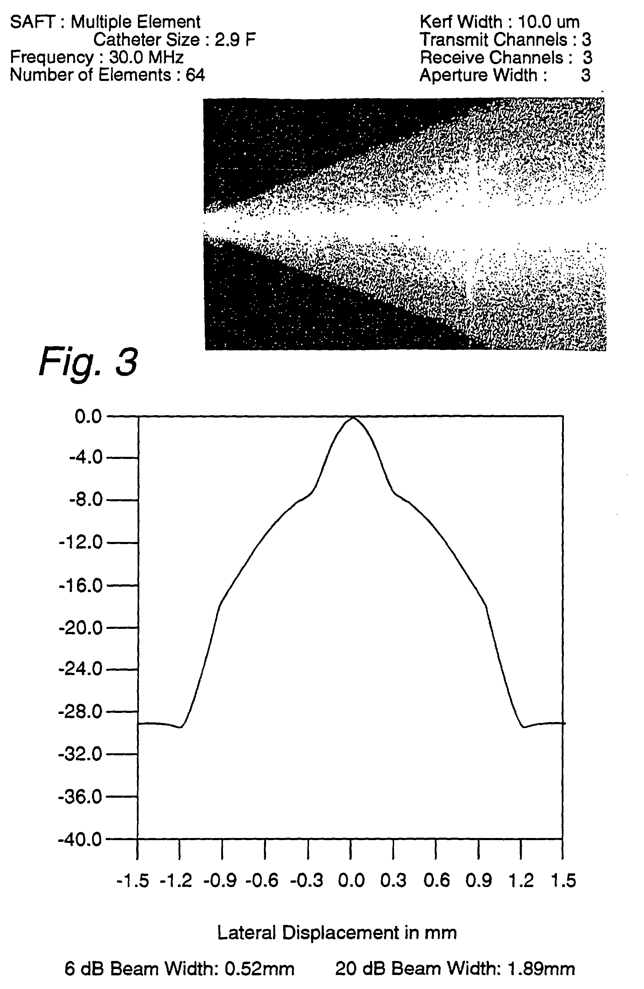

To improve the beamforming capability of these synthetic aperture techniques O'Donnell has described the use of an optimal filtering technique. This uses an optimisation technique to produce a set of filter coefficients which produce a beam profile with lower sidelobe levels than the standard synthetic aperture coefficients. The application of this technique is described mainly in relation to the group-element data acquisition but it can also be applied to single element synthetic aperture. In particular it can be used to correct for the poor beam profile obtained by catheters with lower numbers of elements, enabling these to produce higher dynamic range images. However, the use of group elements, or lower number of elements than optimum gives a beam profile with very high side lobes as shown in *Figure 2* and *Figure 3*. The application of the optimisation technique will improve the side-lobe levels, but there is a trade-off with main lobe width and noise immunity which this method must contend with. It is better to use a technique which produces better beam profiles to start with.

There is disclosed in United States Patent No 5,329,930 a phased array sector scanning ultra sonic imaging system which includes a transducer array with 2N separate transducer elements and a transmitter and receive with N separate channels. The complete 2N element aperture is realised at each beam angle with two firings of the transmitter and the receipt of echo signals from two different sets of N transducer elements. The echo signals from the two firings are coherently summed to form a single receive beam. Two different patterns are provided for selecting which transducer elements to energise and receive from during each of the two firings.

EP-A-0 017 383 discloser ultrasonic visualisation apparatus according to the preamble of claim 1.

The present invention is concerned with overcoming the problems of these prior art arrangements to enable a high quality ultrasound image to be produced whilst at the same time controlling the cost of the system.

The present invention is set out in claims **1** and **15**.

Preferably, in an ultrasound system employing a transducer array, the transmission and receipt of transmit ultrasound pulses and echo ultrasound pulses is arranged so that for each transmit ultrasound pulse emanating from a single transducer element the resultant echo is received by at least one other element of the array so that the plurality of echo signals from the at least two other transducer elements can be processed to give cross-product terms.

The term "cross-product" means that the ultrasound image is formed on the basis of an echo received by at least one transducer element other than the transmitting transducer element.

The earlier discussed prior art techniques all use the same element or group element to transmit and receive. Better beam profiles are obtained if so called cross-products are obtained. Thus according to the present invention an ultrasonic A-scan is attained by using different elements to transmit and receive. For an aperture of n elements there will be $n^2$ such combinations. If these are combined with a standard synthetic aperture algorithm the beam profile so produced is identical to that of traditional dynamic focus ultrasound, as for example disclosed in Hewlett-Packard Journal, Volume 84 No. 12, at the transmit focus, but with the data acquired sequentially in $n^2$ firings rather than generated and received in one firing.

The present invention is concerned with a system for imaging using such cross-products. The advantage of using these cross-products is that the beam profile will have substantially lower side-lobes than that obtained from either the known single element synthetic aperture or the known group element synthetic aperture approach disclosed earlier. The latter two known techniques can be improved further by using an optimal filtering technique.

The present invention is also concerned with an optimisation technique for improving the beam profile of an ultrasound field produced by the cross-product method. This optimisation technique method requires a more complex mathematical approach than that described by O'Donnell in the above paper.

In using ultrasound imaging systems it is known to provide the medical practitioner with the ability to review images already generated by the system by means of a known tape based video cassette recorder and player whereby the data representative of a generated ultrasound image is recorded on the video tape and can later be played back from the tape to enable the practitioner to review selected images.

Whilst this ability to play back images clearly enhances the usefulness of the ultrasound imaging system it is relatively inconvenient as it takes a significant amount of time to reach the relevant section of the tape and it is not always easy to access the desired part of the tape. Furthermore the image quality is often not of the desired standard.

In the system of our above mentioned pending application and also in the system disclosed in our United States Patent 4,081,993 the image data is processed in a pipeline which allows a variety of methods for the software processing of the ultrasound echo signals. In a pipeline process the processing stages are divided into serial tasks, so that the result of one process is fed to the next. This has the advantage that it allows sharing of processor and thus a degree of parallel processing to take place.

The system described with reference to the accompanying drawings provides an enhancement or improvement of the system of US Patent 4,081,993 to provide an easily used and rapid playback feature.

There is a further problem with such ultrasound arrangements in that a dead space or blind spot, as far as the imaging is concerned, exists in the immediate vicinity of the transducer array. This is caused by the fact that the mechanical vibration of the transducer elements to produce the ultrasonic images takes some time to die down after having been energised by an energisation pulse. This time is sufficiently long for the energisation vibration to interfere with the vibration of the crystal caused by the returning echo signal. This phenomenon is sometimes referred to as "ringdown". The time it takes for the transducer element to stop vibrating as a result of its initial energisation is also sometimes referred to as the "ringdown" time.

This phenomenon is described, for example, in US Patent No 4,899,757 and one solution to the "ringdown" problem is disclosed in that patent.

The arrangement disclosed in US Patent No 4,899,757 deals with this "ringdown" problem by including the "dead space" within the catheter itself. In other words the initial path of the outgoing ultrasound signal and the final part of the path of the incoming echo signal are both contained within the catheter itself. It is thus possible with such an arrangement for any target, such as the interior wall of a blood vessel, to be visualised even though that target is immediately adjacent to or in contact with the external surface of the catheter.

Another solution to this problem is disclosed in US Patent No 5,183,048 a reference signal having no echoes is subtracted from the signal received when the transducer is in its normal operating position.

However, there are two problems with this approach. In order to obtain the reference signal the transducer must be operated in an area where there are no echoes. In order to do this the transducer would have to be withdrawn from the patient's artery (where it is desired to obtain images of the interior of the artery) and positioned in a relatively large vessel such as the aorta where there would be no echo signals because the walls of that vessel are sufficiently far away from the transducer. As a practical matter this can cause difficulties.

The second problem is that the ringdown can drift with time so that the reference signal/scan needs to be reacquired at periodic intervals and this again causes further inconvenience particularly as the tip of the catheter would have to be withdrawn from the target artery and reinserted, from time to time, into the patient's aorta.

The system described with reference to the accompanying drawings includes an improved arrangement for dealing with the ringdown problem which arrangement is based on the discovery that although the echoes obtained will vary significantly from scan to scan the ringdown will only vary slowly.

How the invention may be carried out will now be described by way of example only and with reference to the accompanying drawings in which:

*Figure 1* is a diagrammatic perspective view of an ultrasonic transducer array of the kind to which the present invention may be applied;

*Figure 2* is a graph illustrating the performance characteristics of the prior art method of a transducer operation as disclosed in US Patent No 4,917,097 (Proudian/Endosonics);

*Figure 3* is a graph illustrating the performance characteristics of the prior art method of transducer operation as disclosed by O'Donnell in the above referred to paper;

*Figure 4* is a graph illustrating the performance characteristics of one embodiment of the present invention;

*Figure 5* is a graph illustrating the performance characteristics of a second embodiment of the present invention;

*Figure 6* is a graph illustrating the performance characteristics of a third embodiment of the present invention;

*Figure 7* is a graph illustrating the performance characteristics of a fourth embodiment of the present invention;

*Figure 8* represents diagrammatically the problem involved in switching the transducer elements in order to maintain the maximum number of cross-products:

*Figure 9* is similar to *Figure 8* but illustrating the solution to the problem of *Figure 8* according to the present invention;

*Figure 10* illustrates the cross-products available from the multiplexer architecture shown in *Figure 9* for various aperture sizes;

*Figure 11* is a diagrammatic perspective symbolic representation of the method of the present invention;

*Figure 12* is similar to *Figure 11* but illustrates the use of data symmetry to reduce the memory required;

Figure 13 is a block diagram of a system incorporating the present invention;

*Figure 14* is a more detailed block diagram of part of the system of *Figure 13*;

*Figure 15* is a diagrammatic representation of the architecture of the digital signal processor board used in the system of *Figures 13* and *14*;

*Figure 16* shows a modification of the arrangement shown in *Figure 13*; and

*Figure 17* illustrates so-called corner-turn architecture of the type disclosed in US Patent 5,186,177 (O'Donnell).

*Figure 18* is a block diagram illustrating an intravascular ultrasound imaging system to which the present invention can be applied;

*Figure 19* shows how the software of *Figure 18* communicates with external peripheral equipment etc;

*Figure 20* illustrates the data processing pipeline from transducer array to image display;

*Figure 21* is a state machine illustrating the B-mode image sequence operation;

*Figure 22* is a diagrammatic representation of the display screen and associated control;

*Figure 23* is an enlarged view of the B-mode sequence control panel shown in Figure 22;

*Figure 24* illustrates the ringdown problem;

*Figure 25* is a flow diagram illustrating the digital processing stages used in the system of Figure 18; and

*Figure 26* is a flow diagram of a solution to the ringdown problem.

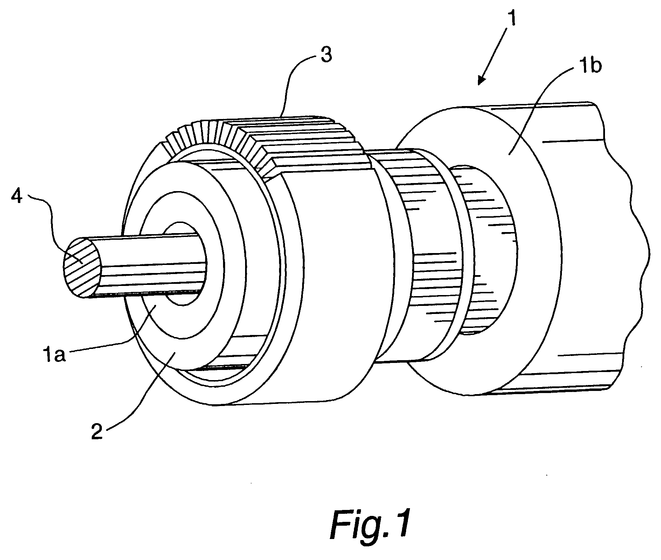

<u>Figure 1</u>

This is the same as Figure 2 of our copending UK Patent Application No 9116478 and shows the distal end of a catheter.

A catheter 1 has an inner tube 1a and an outer tube 1b both of which are made from a suitable moulded plastics material such as nylon.

An electrically conducting support tube 2 is carried on the inner tube 1a and is bonded thereto.

A ceramic piezo-electric transducer array 3 is mounted on the support tube 2. The usual guide wire 4 passes through the inner tube 1a. A more detailed description of this construction of catheter and ultrasonic transducer array can be found in our copending UK Patent Application No. 9116478.

### Figure 2

This Figure illustrates the performance characteristics of the prior art arrangement disclosed in US Patent 4,917,097 (Proudian/Endosonics). As can be seen from this Figure the value/height of the side-lobes is large in comparison with the central beam. This characteristic has the effect of limiting the dynamic range and greyscale of this prior art arrangement.

### Figure 3

This Figure illustrates the performance characteristics of the prior art arrangement in the O'Donnell paper referred to earlier.

One of the objectives of this prior art arrangement is to reduce the height of the side-lobes in relation to the base of the central beam. Although this has been achieved, thus improving the potential dynamic range, this has been done at the expense of the characteristics of the beam profile as a whole and will worsen the noise immunity of the system.

### Figures 4 to 6

These Figures illustrate the performance characteristics of the embodiments of the present invention and are to be compared with Figures 2 and 3 in order to appreciate the improvements and advantages provided by the present invention.

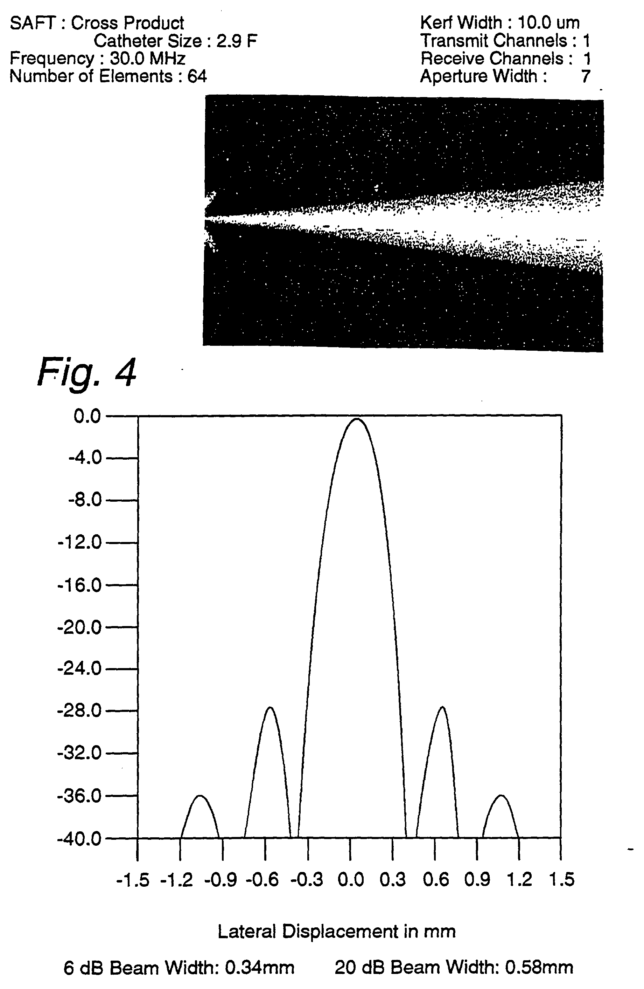

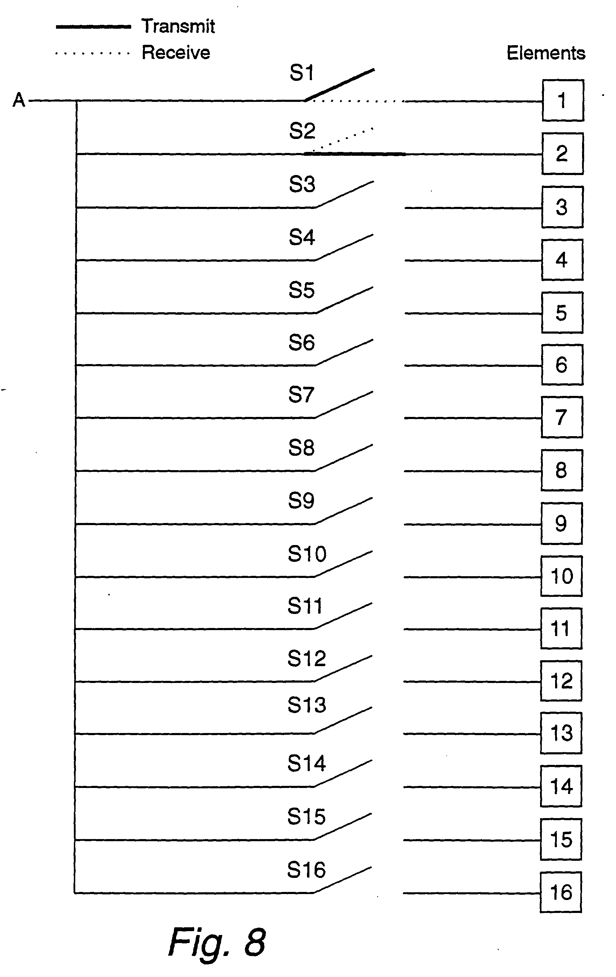

Figure 4 illustrates the performance characteristics that would be obtained if a full set of cross-products could be used. The problem involved in doing this will be explained in relation to Figure 8.

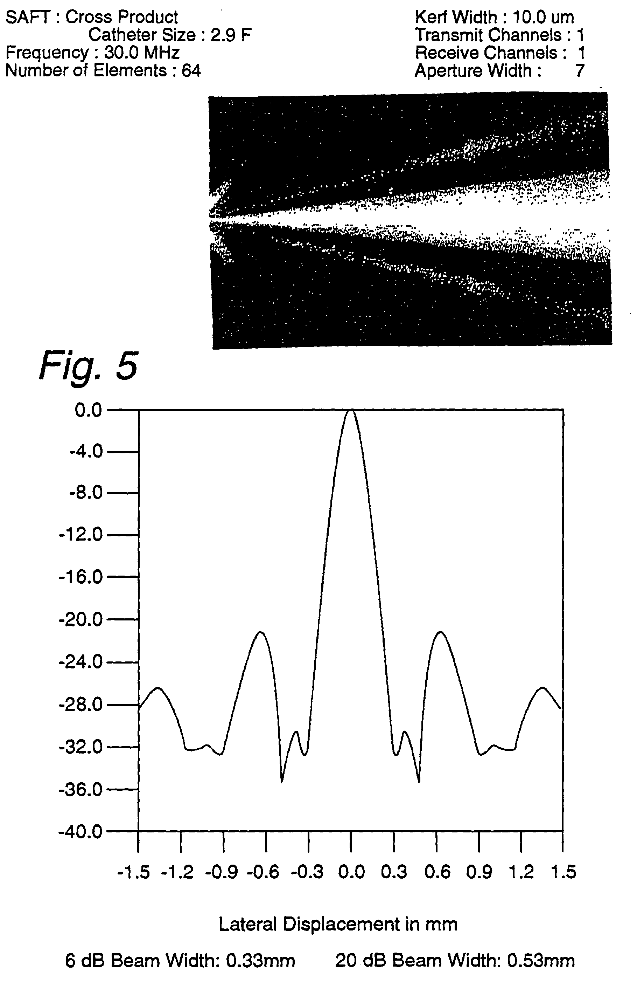

Figure 5 illustrates the performance characteristics that would be obtained in using a first limited number of cross-products. More specifically the missing A-scan lines are: 0-4, 0-5, 0-6, 1-5, 1-6, 2-6, 4-0, 5-0, 6-0, 5-1, 6-1 and 6-2.

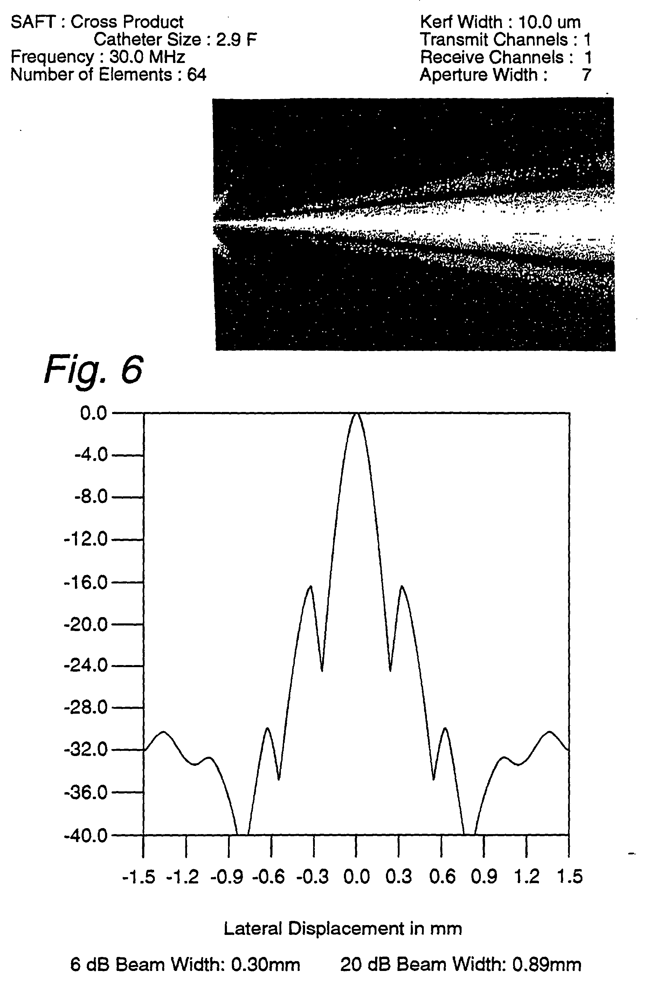

Figure 6 illustrates the performance characteristics that would be obtained using a second limited number of cross-products. More specifically the missing A-scan lines are: 0-4, 0-5, 1-5, 2-6, 4-0, 5-1 and 6-2.

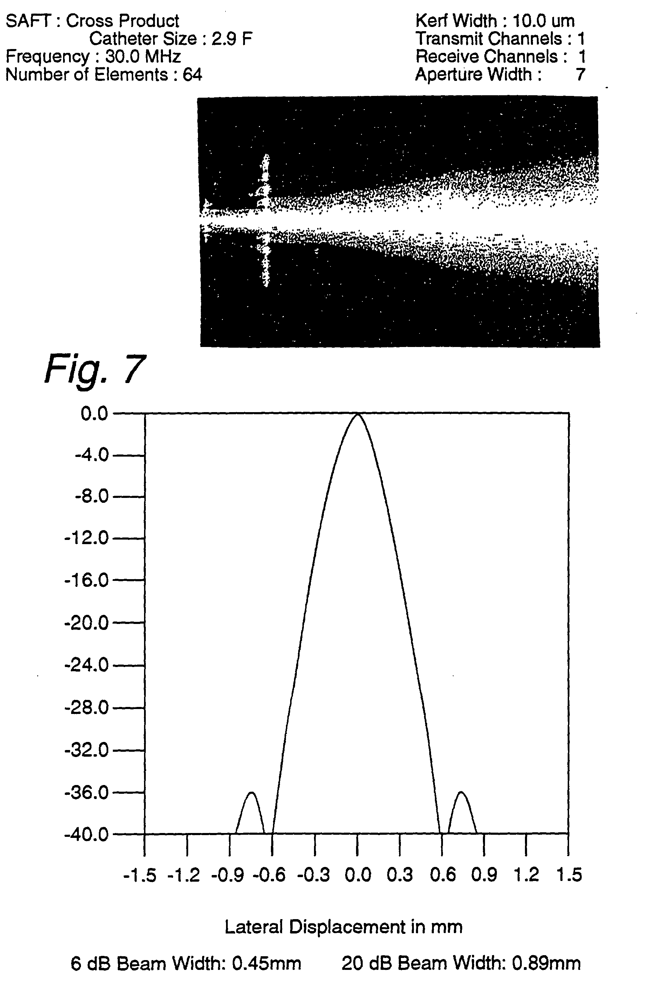

Figure 7 illustrates the performance improvement that is obtainable by applying the optimisation technique of the present invention.

### Figure 8

To obtain a full set of cross-products with a multi-element tip mounted on a catheter would require a multiplexer architecture of the sort disclosed in Figure 8. It can be seen that the position of at least one switch has to change between the transmit and receive parts of an acquisition with transmit and receive on different elements. Such a switch will have a finite switching time and generate a switching transient which will obscure signals from very close to the transmit pulse. This will create a dead-zone of 0.5-1mm around the catheter within which no echoes will be detectable which is unacceptable in the intravascular situation, although it may be permissible in external ultrasound where it is not necessary to image the first few mm of skin.

### Figure 9

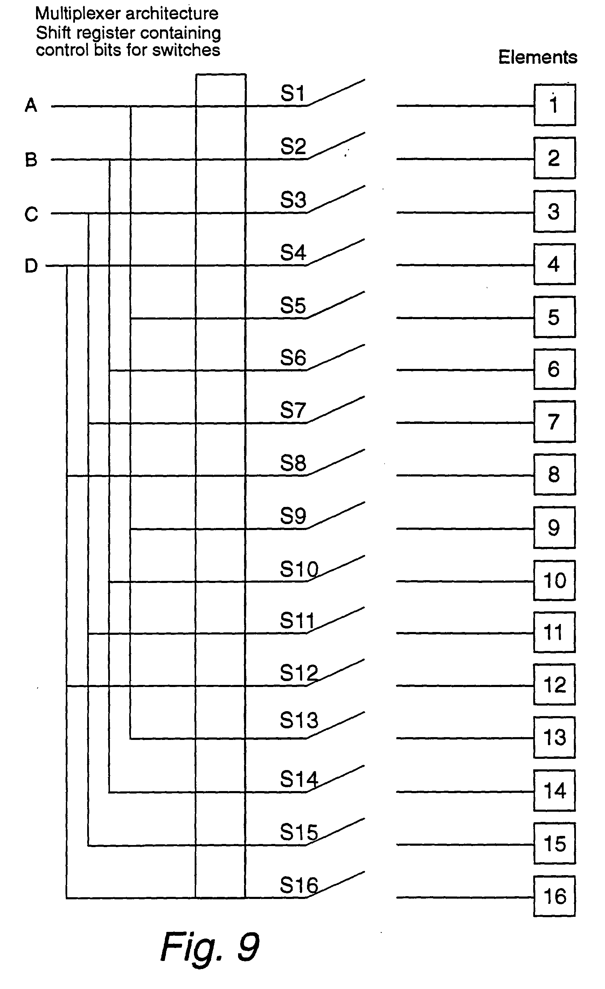

The multiplexer arrangement shown in Figure 9 avoids having to switch elements between transmission and reception and uses a minimum number of switches This arrangement has a number (in this case four) of signal lines. By closing switch S1 and S2, it is possible to transmit on element 1 via line A and receive on element 2 via line B. With this arrangement most cross-products are possible, with the exception of those that have different elements but the same signal line, such as 1-5, 2-6, 3-7, 4-8, 1-9, 1-13, 2-10, 2-14, 3-11, 3-15, 4-12, 4-16.

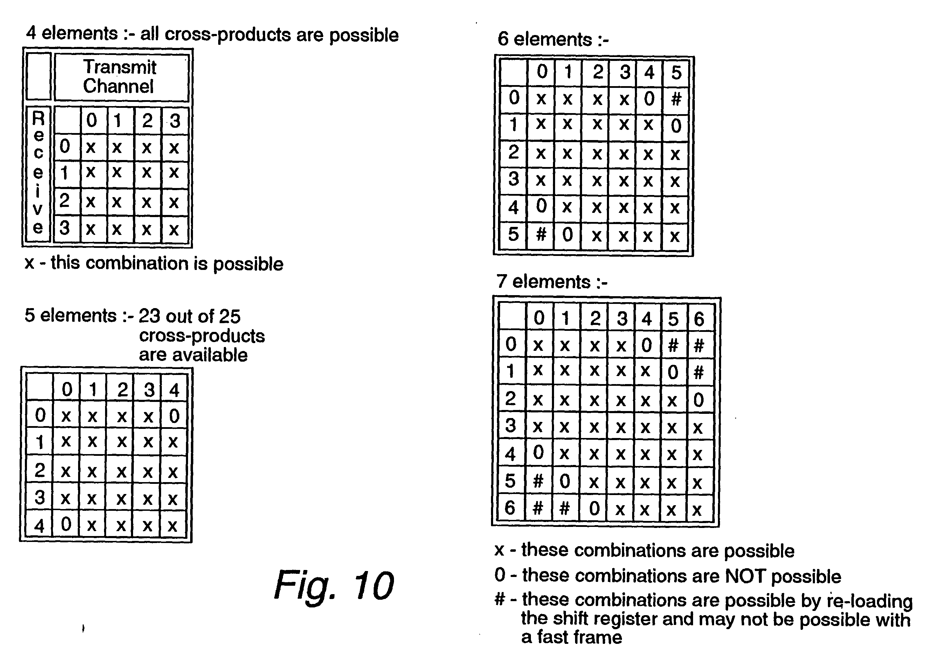

The most convenient method of controlling these switches is to have a shift register loaded with control bits. This enables the next switch in the sequence to be operated by clocking the shift register along one bit, and it is suitable for serial control lines rather than parallel addressing. For large apertures all the permissible cross-products cannot be obtained by clocking one bit pattern through the shift register. The shift register has to be cleared and a second pattern loaded. Figure 10 shows the cross-products available with one and two bit patterns, with four r.f. signal lines, for different apertures.

This limited cross-product data set gives a beam profile (see Figures 5 and 6) that is not significantly inferior to that obtained by the full cross-product data-set (see Figure 4), and is superior to the prior art single element or group element synthetic aperture approach.

The prior art single element or group element synthetic aperture is reconstructed with the following equation (1):

$$A_k(t) \quad = \quad \sum_{i=k-m}^{k+m} F_{i-m}(t).BB_i(t)$$

In this equation $BB_i$ is the baseband (complex) signal from the k'th element or element group, and $F_i$ is a complex filter coefficient. The aperture size is 2m+1, and F is only defined for 2m+1 values. This equation is then a series of range dependant one dimensional linear convolutions, often referred to as complex filtering. For a catheter with N elements, both single element and element group synthetic aperture technique produce N independent A-scans, and process these with suitable coefficients to obtain a set of N processed A-scans.

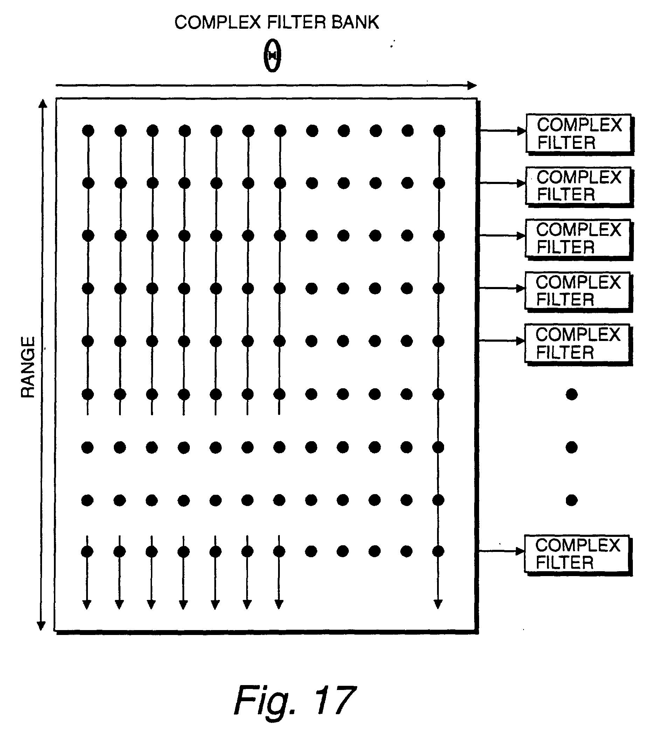

This can be implemented with a two-dimensional corner turn architecture as shown in Figure 17.

In contrast to the prior art arrangement just described the situation when there are cross-products is very different and in this case the equation representing the reconstruction is as in the following equation (2): where:

$$D_n = \sum_{j=n-M}^{n+M} \sum_{k=n-M}^{n+M} B_{j,k} F_{j-n,k-n} \quad for \quad n = -0....N$$

$D_n$ is the output at scan line n.

$B_{j,k}$ is the received acoustic signal when transmitting on element $j$ and receiving on element $k$.

$F_{j-n,k-n}$ is the complex filter coefficient applied to $B_{j,k}$ and 2m+1 is the aperture width and N is the total number of elements.

Note that $B_{-ij} = B_{N-ij}$

So with an aperture of 2M+1, $(2M+1)^2$ lines of data and filter coefficients are used, so a corner-turn architecture is not possible.

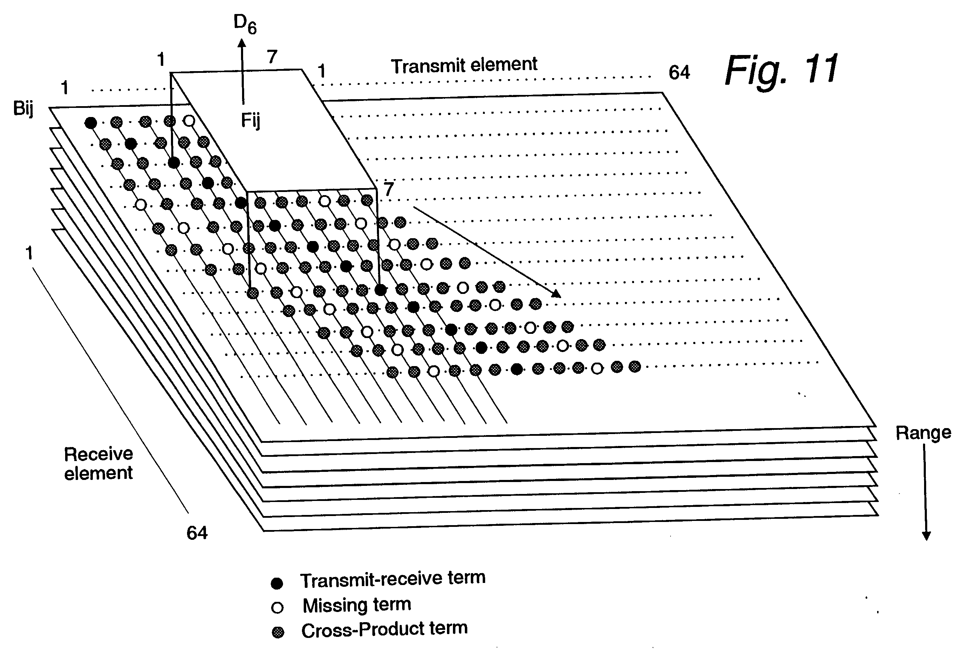

The data at a particular range can be represented by an N*N matrix, where N is the number of elements, and Bij represents the data transmitting on element i and receiving on j. As shown in Figure 11 this matrix only has points (shown by solid dots) in a band about its leading diagonal, and there are also lines of forbidden points (shown by circles) that are not permissible with the multiplexer architecture shown in Figure 9. The coefficients to produce a single point $D_n$ are represented by a (2m + 1) x (2m + 1) array, Fij. Each point $D_n$ is calculated by a matrix multiplication of Fij with appropriate points for Bij. The next point $D_{n+1}$ is calculated by moving the matrix F along the leading diagonal, and performing another matrix multiplication.

The complex filter coefficients F determine the lateral response, $D_n$. One form the coefficients F can take is given by the conventional synthetic aperture of the following equation (3)

$$F_{ij} = \frac{e^{ik(r_i+r_j)}}{(A(r_i)A(r_j))}$$

where $r_i,r_j$ are the distances from the field point r to the elements i,j respectively and $A(r_i)$ is the sensitivity at point r from element i.

If this reconstruction equation is applied to the full cross-product data set, then the resultant data set $D_n$ is identical to that produced with the conventional dynamic beamforming method at the transmit focus. The only difference is that the data is acquired sequentially rather than in one acquisition, and the response is shown in Figure 4.

If this reconstruction equation is applied unaltered to the limited cross-product data set, as produced by the hardware architecture described in Figure 9, then the resultant $D_n$ will have inferior properties to that produced from the full cross-product data set (Figure 4). There are many advantages in further limiting the cross-products to a smaller set that is obtained from one bit pattern of shift register as described in Figure 10, as this permits a faster and simpler operation of the multiplexer, and the resultant field pattern is shown in Figure 6.

It can be seen that the processed data represented by Figures 5 and 6 is still superior to that given by the prior art as demonstrated in Figures 2 and 3.

The cross-products may in certain circumstances be limited further by now acquiring data where the same element is used for transmit and receive, represented by $B_{jk}$ in equation 2. Such data will be the most prone to acoustic ring-down and its exclusion from the dataset used for the reconstruction will enable echoes closer to the transducer to be detected.

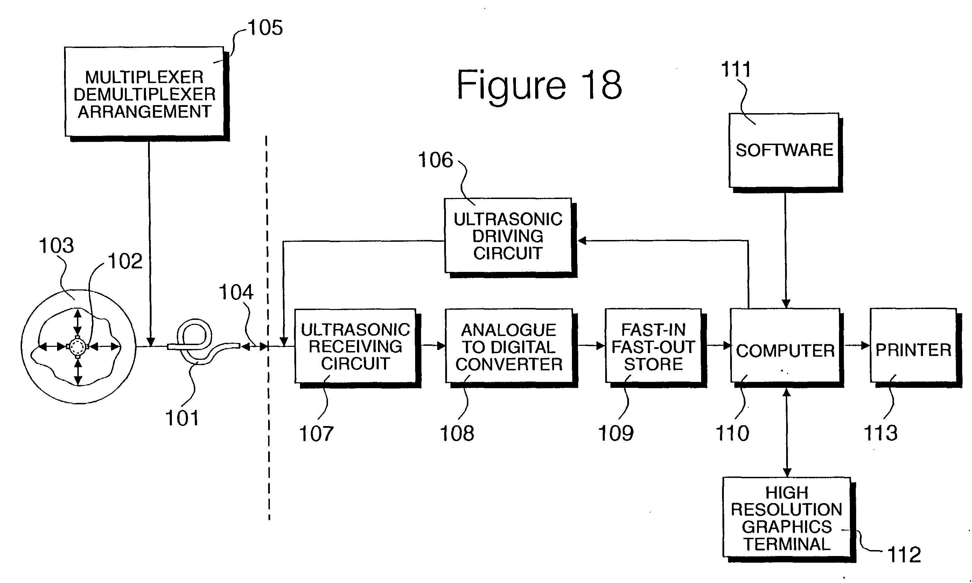

The reconstructed response $D_n$ can be improved further if the filter coefficients Fij are obtained not from the standard synthetic aperture algorithm of equation (3), but by an optimisation process which minimises the least square array between the reconstructed data set given by equation (2) shown in Figure 18, and a desired acoustic response D'.

The filter coefficients F are given by the following equation

$$F = (B^T A^T AB - \lambda I)^{-1} B^T A^T AD' \qquad \text{(Equation 4)}$$

where

B is a matrix representing the cross-product data $B_{ij}$ D' is the desired acoustic response
A is a vector representing an element weighting function
I is the identity matrix
$\lambda$ is a stabilisation constant
T is the matrix transpose operation

Figures 13 to 15

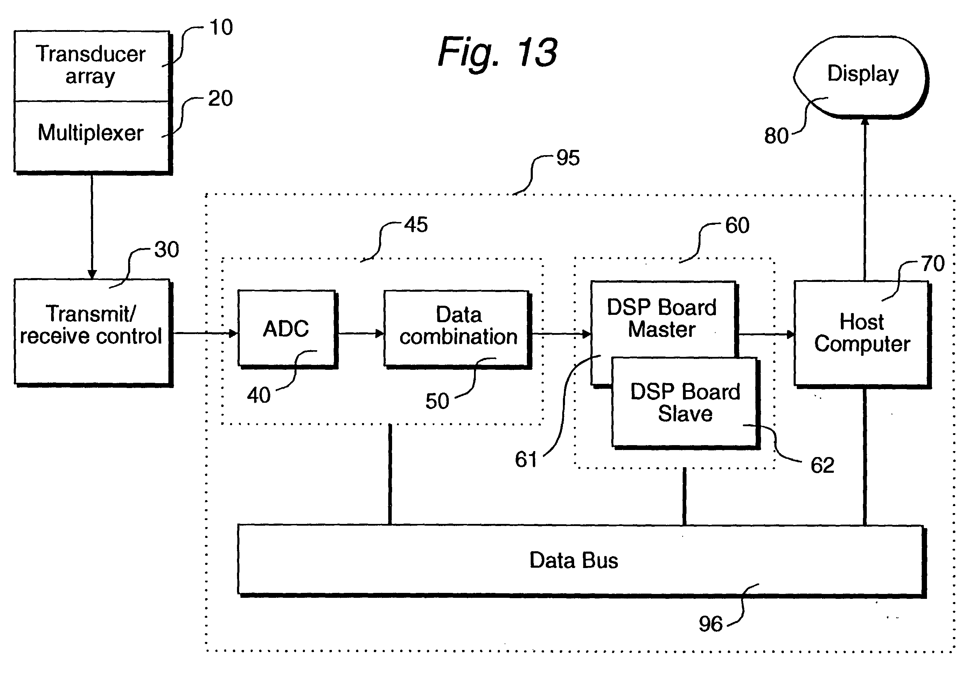

The method and apparatus of the invention will now be described with reference to Figures 13 to 15.

The hardware implementation of the algorithm of the present invention has to process at a significant rate to produce real-time processing, and this system is illustrated in Figure 13. It consists of the transducer array 10 and multiplexer 20 mounted on the catheter tip, an interface unit 30 to control the multiplexer 20 to address appropriate transducer elements in transmit and receive and to buffer signals, a transceiver unit 95 which performs the processing of the ultrasound data to produce an image, and a display 80. The transceiver unit consists of an ADC board 45, which consists of an analogue-digital converter 40 and a data combination circuit 50, a computer based digital beam former 60, which consists of a master DSP board 61 and one or more slave boards 62, and a host computer 80.

The analogue data in the form of a cross-product baseband quadrature pair $B_{j,k}$ produced by the interface unit 30 is passed to the ADC board 45, where it is converted to a digital signal by the ADC 40.

It is possible to make use of a fundamental symmetry of the acoustic data to reduce the processing requirements by nearly a half. It can be shown by application of the reciprocity theorem that Bij=Bji, and hence Fij=Fji. In one implementation, only Bij is acquired and Bji is synthesised using the identity above. In another implementation both are acquired and the mean taken, so:
Bji = Bij = (B'ji + Bij')/2 : B' are the acquired values, B are those passed on to the processor.

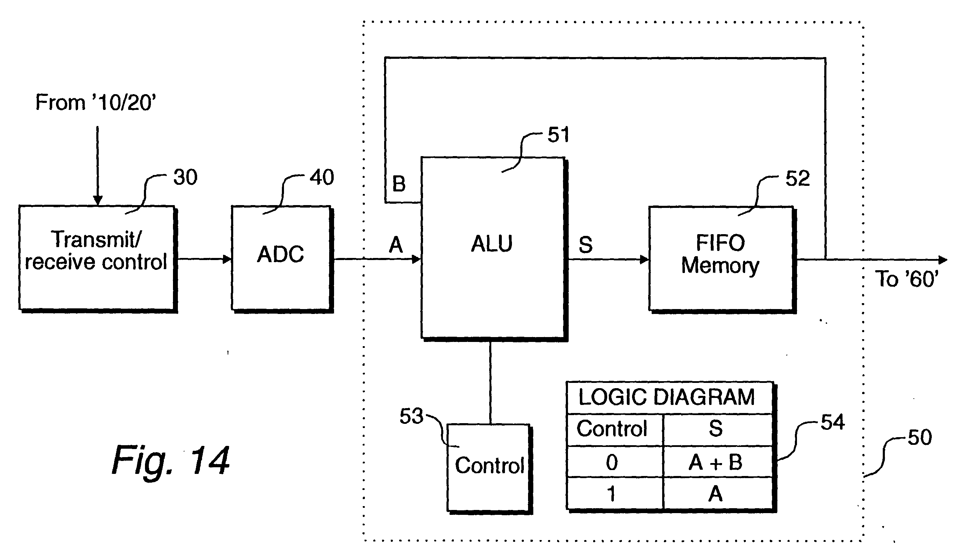

This averaging of symmetric values is implemented in the data combination circuit 50 of Figure 13 which has the form shown in Figure 14. Since the acquisition of Bij and Bji requires identical switch settings (both i and j closed) they can be obtained sequentially without stepping the shift register, the only difference being the use of the appropriate signal lines. First the data line Bij is acquired and stored in memory 52. Then the data set Bji is acquired and combined point by point with those from Bij.

The data combination circuit 50 comprises a programmable adder 51 (also known as an ALU (arithmetic logic unit)). The circuit 51 adds A+B to make S, so point by point it adds one incoming data set to the previous one stored in the FIFO memory. It is turned off by a signal from the control 53. The logic diagram is shown at 54.

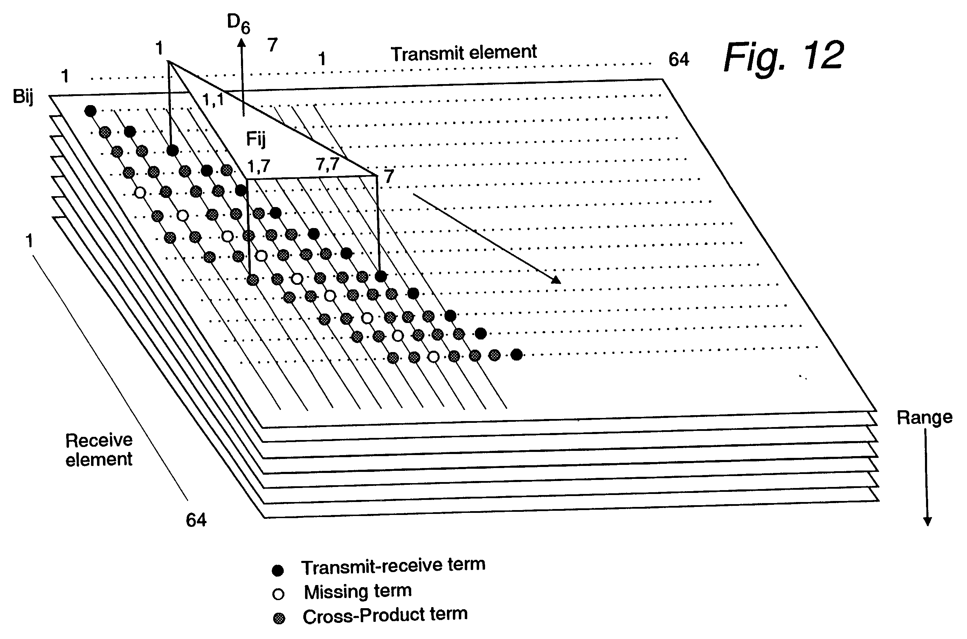

The effect of this data symmetry is to eliminate all data points and filter coefficients one side of the leading diagonal, so the arrangement of Figure 1 becomes the arrangement of Figure 12.

The data array $B_{ij}$ produced by the data combination circuit 50 is passed from the ADC board 45 to the master DSP boards 61 over an industry standard (RACEway ™, Mercury Computer Inc) high speed local data bus.

It should be noted that the filter matrix $F_{ij}$ will vary with range. In particular for close-in points the best beam profiles are obtained with a smaller aperture (m) than for larger ranges. This is analogous to the use of dynamic aperture in conventional beamforming. It is achieved by modifying $F_{ij}$ to only use values from an aperture less than the matrix size, so many terms will be zero, with a central active sub-matrix.

It is also advantageous to calculate data along lines in between the elements, to give adequate sampling of the lateral resolution. This can be achieved using the same processing as equation (2) with a different set of filter

coefficients $F_{ij}$ to that used to calculate the on-element response.

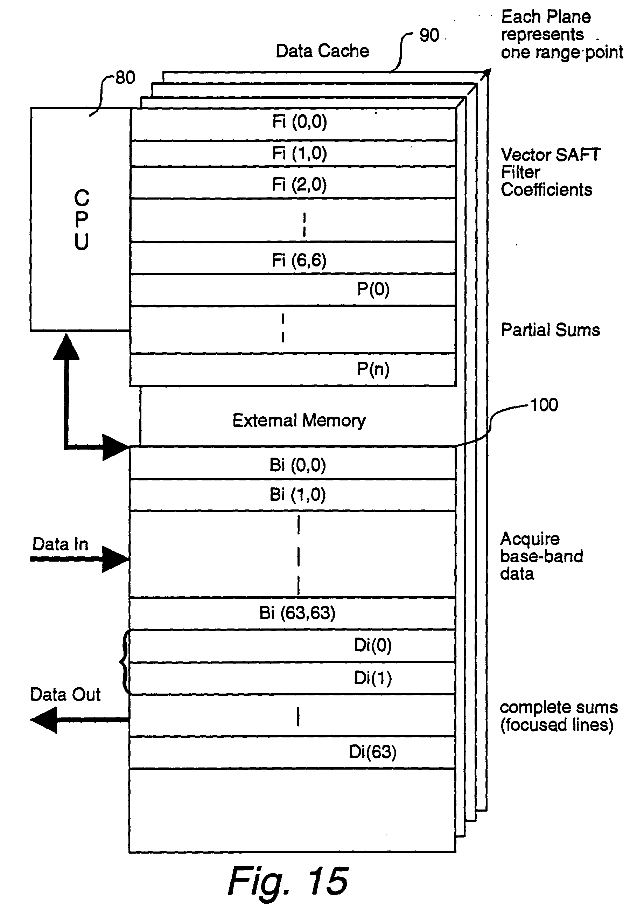

An efficient implementation of the process of performing the matrix multiplication of the equation (2) is shown in Figure 15. Figure 15 is the architecture of the particular processing card to perform matrix multiplication of the equation (3). Such a processing card 61 is the Mercury MDV6 (Mercury Computers Inc, Chelmsford, MA), which has up to four reduced-instruction-set (RISC) Intel i860 processors 80, arranged to operate in parallel as an array of vector processors. Each processor is closely coupled to a fast data cache 90 and also to a RAM external memory 100. Further boards may be added as slave DSP cards 62 to provide more processors.

Each incoming data line Bij contributes eventually to up to 2m+1 processed lines $D_n$, and to make most efficient use of the high-speed cache memory 90 and processor 80, the 2m+1 products P are calculated in preparation for eventual summation as the data arrives prior to all the data being acquired for the output lines that the input data line contributes to and are stored in the cache memory 90. The coefficients Fij remain in the cache memory 90 at all times. The storage of partial products in this way allows efficient pipe-line processing of the data. Each range point has a different set of coefficients Fij, and these are stored as a 3-D matrix (2m+1,R) in the high speed cache memory 90, for multiplication with the data set Bij, which is a vector of length R. This approach avoids the need for coefficients to be continually loaded in and out of high-speed cache memory.

The system also allows the use of multiple DSP processors 61 and 62 in Figure 13 by sharing the range amongst the processors. In this implementation the processor depicted in Figure 15, handles a fraction of the range, and a number of such processors cover the whole range.

These are arranged in a master/slave(s) configuration.

This means the 3-D matrix of coefficients is different in each processor, and is a smaller matrix of (2m+1, 2m-1,R/Z), where Z is the number of processors. Apart from the coefficients loaded into its cache memory each processor performs the same operations, and so is suited to a parallel architecture, which is necessary to obtain the processing rate.

Once the partial products contributing to a particular data line are generated the data line is calculated from the appropriate sum and stored in external memory on the master board. The various ranges are concatenated to produce a full focused A-scan line. Once all the focused A-scan lines for a particular frame are assembled, they are then passed as a N*R array to the host computer which performs envelope detection, and scan conversion from R-format to a rectilinear X-Y format.

The coefficients Fij can be calculated from the geometric synthetic aperture formula, and have the form of equation (3).

In another implementation the co-efficients are calculated by an optimising process which minimises the square error between the beam profile produced and a desired beam profile.

As an alternative to the processors of Figure 15 sharing the range they could instead share the angular displacement. In other words the total amount of processing to be carried out can be divided in a number of ways, including by range or by angular displacement, and then shared out among the plurality of processors.

Thus with this alternative of sharing by angular displacement the following variations to the description of Figure 15 would apply.

Instead of handling a fraction of the range the processor shown in Figure 15 would handle a fraction of the angular displacement, a number of such processors covering the whole circle.

Instead of the 3-D matrix of coefficients being different in each processor the 3-D matrix of coefficients would be the same in each processor in the case where it is the angular displacement which is being shared. In this latter case each processor would produce a segment of the complete focused A-scan lines, and thus perform the same operations and be suited to a parallel architecture which is necessary to obtain the processing rate required.

Once the partial products contributing to a particular data line are generated and the data line is calculated from the appropriate sum and stored in external memory (as with the embodiment previously described with reference to Figure 15), in the case where the angular displacement is being shared the external memory is local to the current DSP board. Furthermore, each DSP board performs envelope detection and scan conversion from R-format to a rectilinear X-Y format for the A-lines corresponding to a sector of the image, typically one quadrant. The DSP boards process their respective sectors in parallel, and on completion, each passes the sub-array to the host computer 90. The host computer then assembles the sub-arrays into the full rectilinear X-Y image.

Such a host computer is a VME Sparc CPU10, (Force Computers Inc, San Jose, CA). The DSP board 61 transfers the data to the host computer over a VME bus 96, and the ADC board, DSP boards and host computer are all mounted in a standard VME card cage to form the transceiver 95.

With the arrangement described with reference to Figure 15 where the processor handles a fraction of the range the circular image is in effect divided into annular rings whereas in the alternative described immediately above the circular image is divided into sections.

With the arrangements described above in connection with the drawings the signal lines can either be used for transmitting or receiving depending upon the particular transducer element pairing. In the preferred embodiment the multiplexer architecture selects less than all of the available cross-products. This not only results in a simpler construction but also avoids the need to switch between transmission and reception.

The present invention thus overcomes the problem of obtaining high image quality given that the overall physical arrangement is such that it is not possible to have one wire per transducer element. This is achieved by the use of cross-products which are acquired sequentially.

This acquisition can be achieved by means of a multiplexer although this has the disadvantage of requiring switching between transmission and reception.

As an alternative the number of cross-products may be reduced to enable a different multiplexer architecture which eliminates the need for switching between transmission and reception. With this modified multiplexer architecture it is still possible to obtain good quality images.

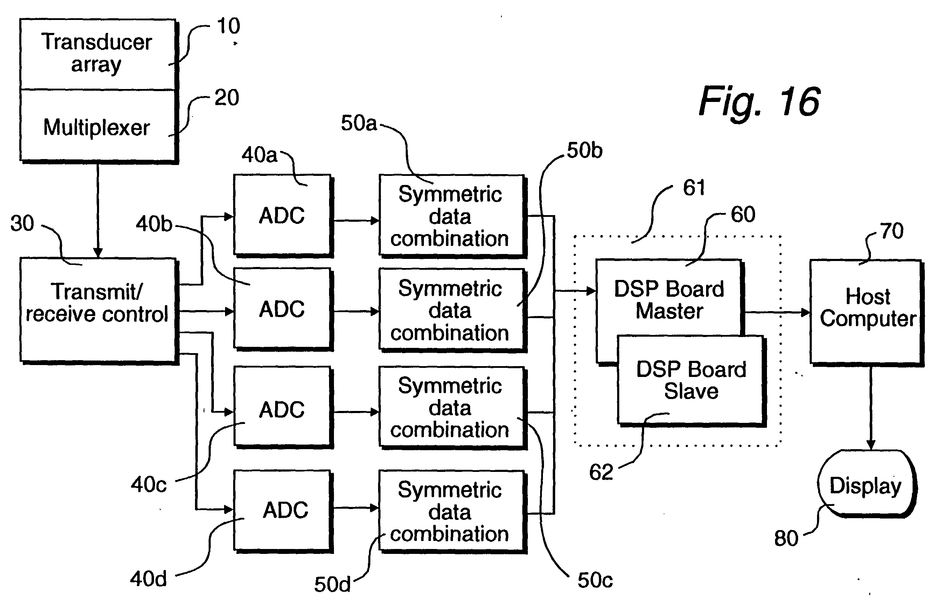

In a further embodiment shown in Figure 16 those items which are equivalent to items in Figure 13 have the same reference numerals. The receive signals from all the $n$ receive lines can be acquired in parallel using the arrangement of Figure 16, in which the ADC 40 and data combination circuit 50 are replicated $n$ times so that there is one per signal line. This allows a set of $n$ cross-products corresponding to the same transmit element and a number $n$ receive elements to be obtained simultaneously rather than sequentially, by closing the appropriate $n$ switches on the multiplexer. The echo wave-trains are stored in corresponding buffer memories on 50a to 50d and fed to the digital signal processing board 50 one cross-product at a time, and then processed in the same manner as if it had been acquired sequentially. In the embodiment of Figure 16 $n = 4$.

The advantage of this embodiment is that the full cross-product data set can be achieved with less transmit excitations. The time saved can be used to give a higher frame rate, or to permit repeat firings with the same settings to allow signal averaging and a higher signal-noise ratio than with sequential acquisition.

### Figure 18

An ultrasonic transducer array 102 is mounted on the distal end of a catheter 101 and is adapted to be inserted into an organ, e.g. artery 103 of a patient in known manner. The proximal end of the catheter 104 is connected to a transceiver arrangement shown to the right of the dotted line in Figure 18. In order to reduce the number of electrical connections which have to pass the length of the catheter a multiplexer/demultiplexer arrangement 105 is provided.

The transducer array 102 is energised by an ultrasonic driving circuit 106 and signals representative of echo pulses received by the transducer array 102 are received by an ultrasonic receiving circuit 107. The analogue signals received by the circuit 107 are then converted into digital signals by an analogue-to-digital converter 108 and then passed via a fast-in-fast-out store 109 to a computer/processor 110 which is under stored program control by means of software 111.

Images representative of the interior of the artery 103 can be displayed on high resolution graphics terminal 112 or printed out by a printer 113.

Figure 18 is merely to illustrate the kind of intravascular ultrasonic imaging system to which the present invention may be applied.

### Figures 19 & 20

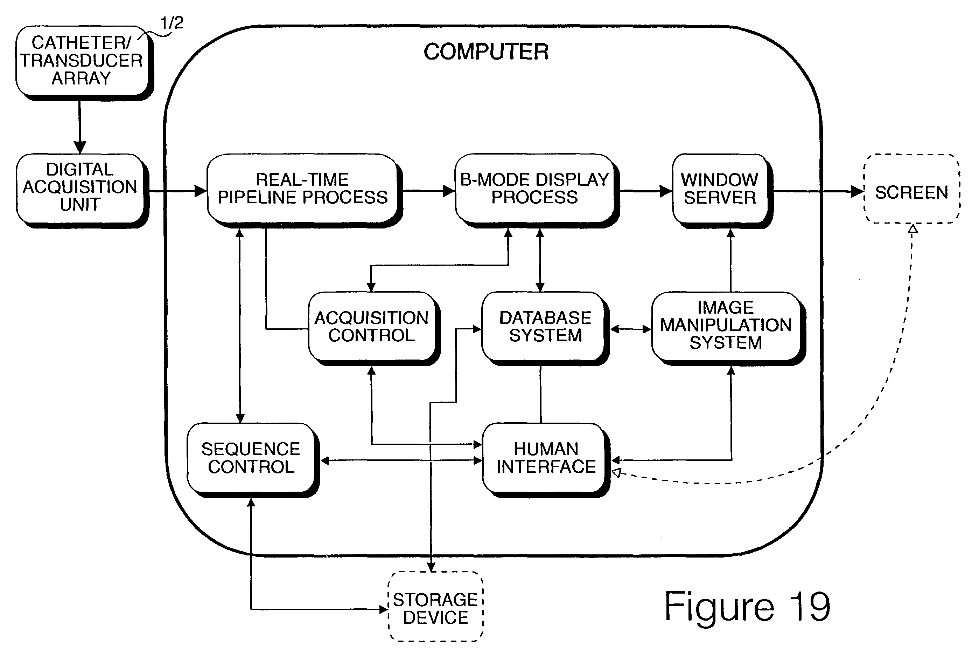

Figure 19 shows in more detail the structure of the software 111 of Figure 18. It consists of a processing pipeline 117, which processes the ultrasound data to give an ultrasound image, a B-mode display process 118, which manages the display of that data, and controls contrast and brightness, and communicates with the display window server 119, which incorporates industry standard display routines such as X-windows. Both the processing pipeline and the B-mode display process are managed by the acquisition control 120, which synchronises the processes and is controlled from the WIMP based human interface 121. The human interface also manages other processes such as image manipulation, 122 which is not described in this specification, and it communicates with the database system 123, which manages data handling and file management, including data stored on the storage device 124.

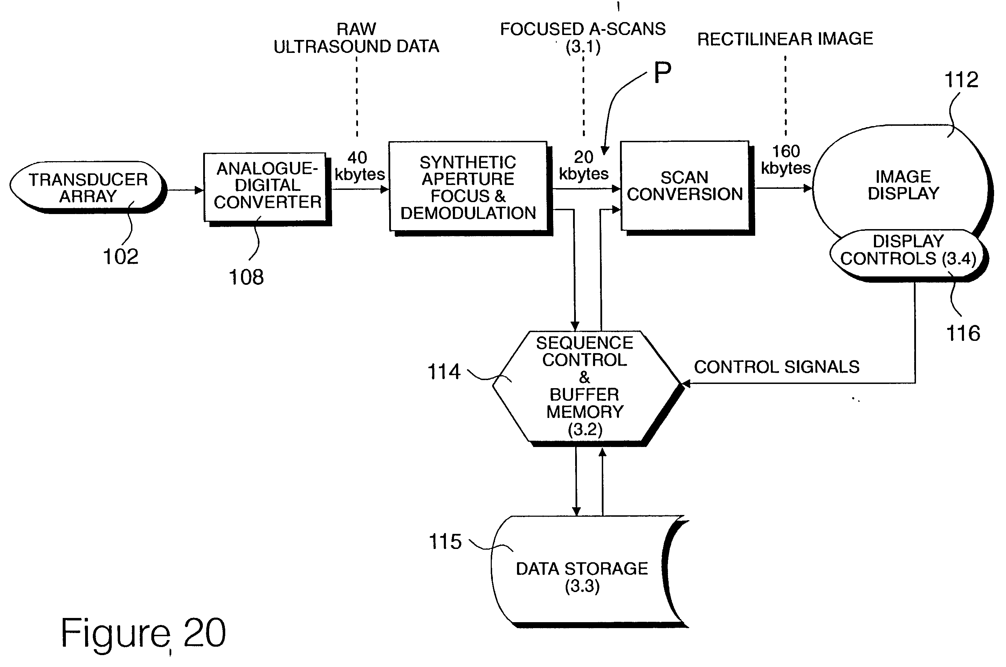

The pipeline 117 is shown in more detail in Figure 20 together with a sequence control 114.

The pipeline allows sharing of processors in a multi-process or architecture, and thus can accommodate parallel processing.

Figure 20 shows the preferred embodiment of this pipeline in which the ultrasound data is focused to give a number of radial A-scans, and then converted to an X-Y display.

The focusing process is described in our co-pending UK application 9418630. The amount of data for each frame at different stages throughout the pipeline is shown in Figure 20 for a typical set of parameters and at the focused A-scan stage the data is at its minimum size of 20 kbytes having been at 40 kbytes at the raw ultrasound data stage.

The computer system used to process the real-time B-mode images referred to above has sufficient electronic memory 114 to store this partially processed data frame by frame. This data can then be transferred to an appropriate non-volatile magnetic or opto-magnetic storage media 115 as digital computer compatible files. With known double buffering techniques the sequence control process can transfer this data to storage while new data is being acquired, thus limiting the requirements on the buffer size. In this implementation one buffer is being filled with new data, whilst a second buffer is being transferred to storage, and the two buffers alternate their function. These simultaneous operations can be readily handled by a multitasking operating system such as UNIX.

This data can be later recalled from storage 115 and re-introduced into the processing pipeline at the same point P at which it was removed, and the processing continued until the final image is displayed at 113. The later stage processing will typically increase the amount of data as it is converted into a rectilinear image. Since there is no data lost, the net effect is as if the final video image had been stored, but using significantly less data and hence data storage. The control of the storage and retrieval is performed by a screen-based user interface 116, and since the delay in passing through the pipeline is of the order of the frame-to-frame interval, ie. 1/20 second, the effect of varying the controls appears to be instantaneous.

This then gives the equivalent of a video recorder but instead of being stored in analogue form on a magnetic tape, it is stored as digital data which will have the following advantages:

(i) Data is stored in digital form, so will be faithfully reproduced on replay, without the signal loss or distortion associated with tape based systems.

(ii) Other information, for example patient name and details, details of the scanning session, can be stored with the sequence, facilitating retrieval of sequences.

(iii) Once a sequence is identified and retrieved into memory, individual frames of data can be displayed in any order. Thus the display speed and direction can be altered very quickly as it is not restricted by the limitations of a video tape mechanism. The frame number or the elapsed time can be displayed and used to locate individual frames.

(iv) Since the invention is implemented on a high performance workstation using a windows-based graphical user-interface the operation of this feature can be made to use a screen-based control panel which has a similar appearance to a conventional VCR, thus providing a familiar user interface.

### Figure 21

This is a state machine which illustrates the recordal and playback of the B-mode images.

### Figures 22 and 23

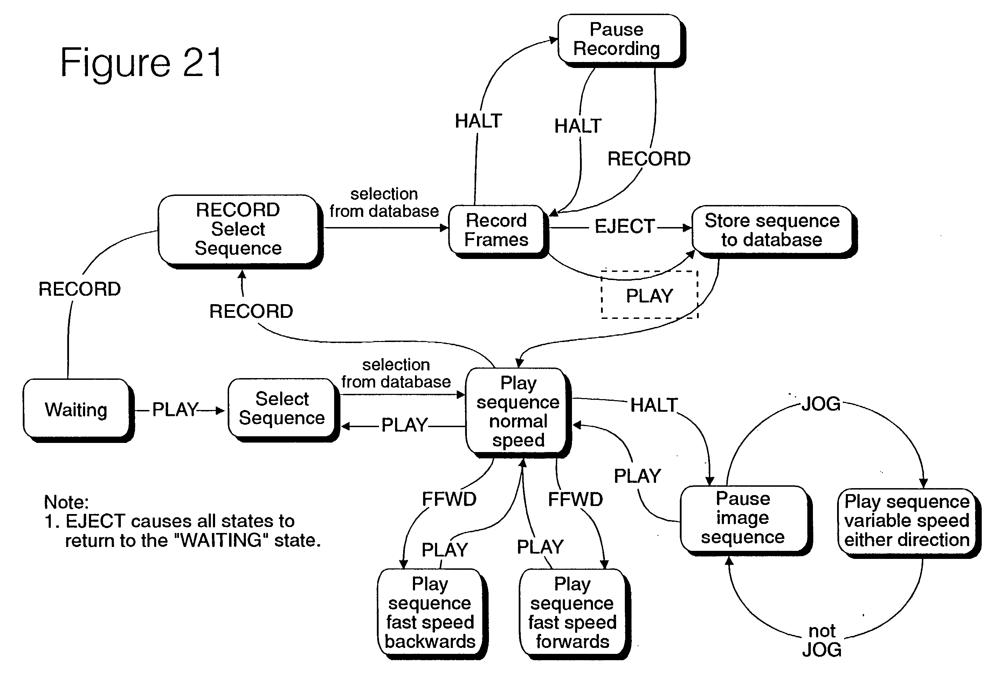

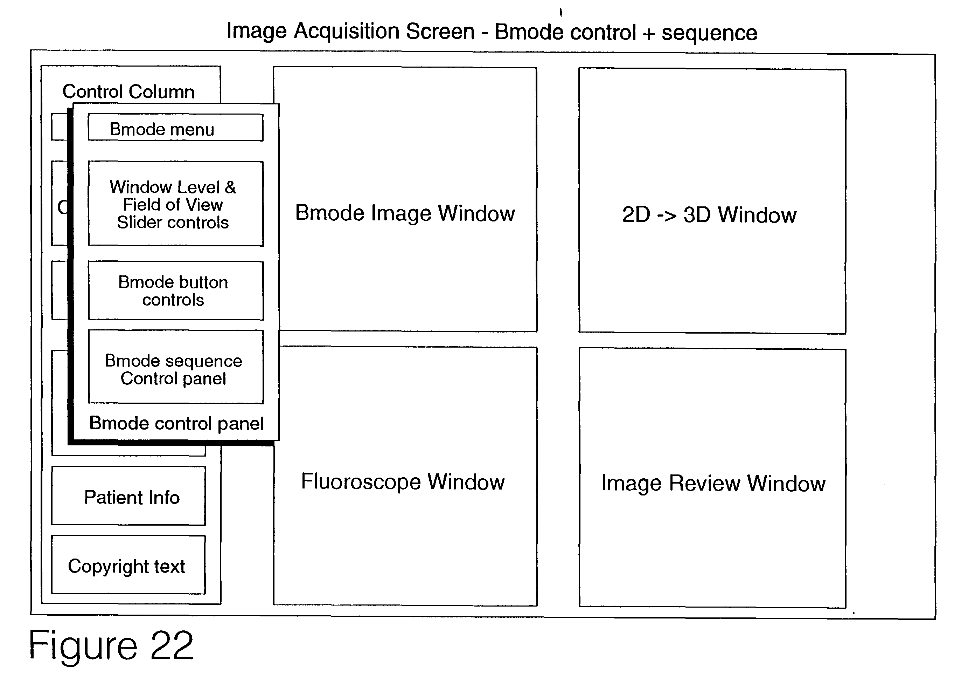

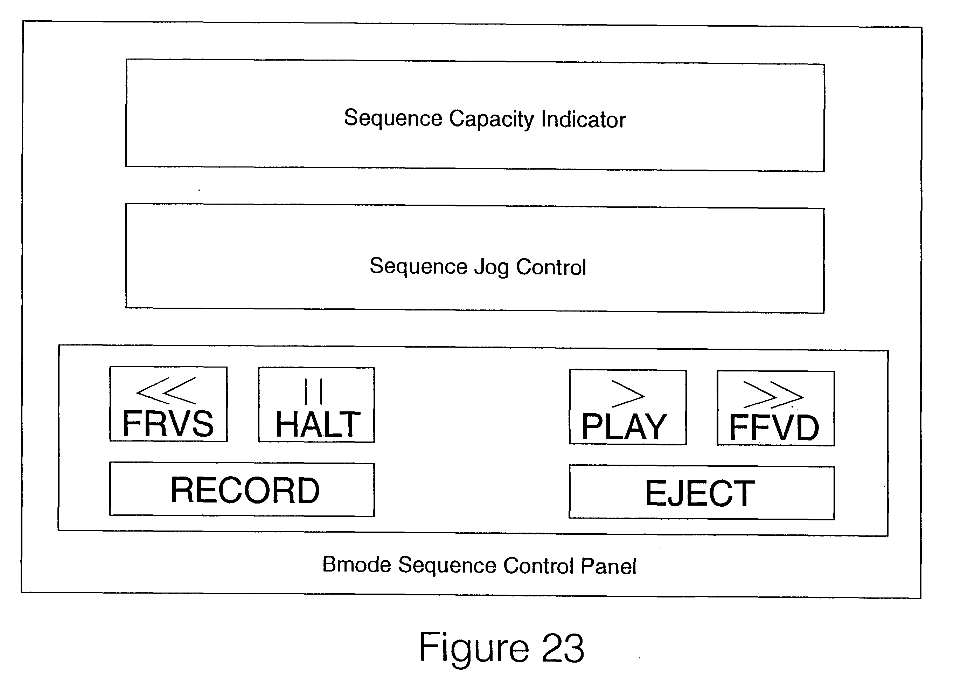

These figures illustrate the screen layout seen by the user as compared with Figures 18 to 21 which describe how the system operates. Figure 22 illustrates how the screen based controls are positioned on the display 113, adjacent to the displayed image. Figure 23 is an enlarged more detailed view of the B-mode sequence control panel shown in Figure 22, demonstrating how the screen layout can be designed to present the user with a control panel that is familiar to users of conventional tape VCRs.

### Figures 24 to 26

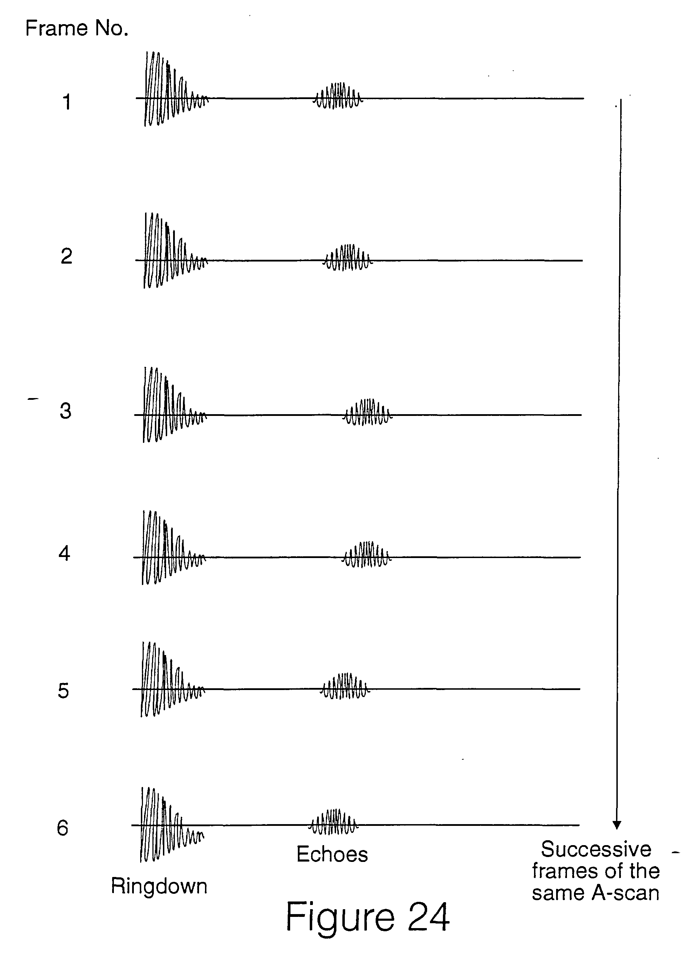

Referring to Figure 24, the ultrasound echo signal, or A-scan, arising in a system as shown in Figure 18, and previously described, contains a component that is due to decaying vibration of the transducer following its initial excitation. This is the so-called ringdown. This vibration can persist for 1-2 micro seconds after the initial transmit pulse and can obscure the presence of echoes within 1-2 micro seconds of the transducer. This is illustrated diagrammatically in Figure 24 which shows six successive frames of the same A-scan.

It is desirable to remove this ringdown as it produces an undesirable central blind spot in the image and it obscures echoes close to the transducer and various solutions proposed as described earlier.

In the solution proposed in US Patent 5,183,048 a reference signal with no echoes is acquired and subsequent A-scans are subtracted from it.

This can be expressed mathematically thus:

$$A_i(t) \ = \ r_i(t) \ + \ s_i(t) \ .. \ (Equation \ 5)$$
$$A\text{-scan} \qquad = \quad ringdown \quad plus \quad echo$$

$$R(t) \ = \ r(t) \qquad\qquad .. \ (Equation \ 6)$$
$$Reference \quad = \quad scan \ taken \ in \ region \ without \ echoes$$

$$P_i(t) \ = \ A_i(t) - R(t) \qquad .. \ (Equation \ 7)$$
$$Corrected \quad = \quad Acquired - Reference$$
$$scan \qquad\qquad scan \qquad scan$$

$$= \ s(t)$$
$$echoes$$

There are two problems with this technique. The reference scans require a field in which there are no echoes, typically in a large vessel such as the aorta, and this can be difficult to obtain. Secondly the ringdown r(t) can drift with time, so the reference scan needs re-acquiring at periodic intervals, which is inconvenient.

The solution of the present invention is based on the realisation that whilst the ultrasound echoes will vary significantly from scan to scan the ringdown will only vary slowly. The echo will depend on the position and orientation of tissue structure relative to the transducer, and will thus change from scan to scan with movement of the tissue, due to the pulsatile motion of arteries. This motion has frequency components related to the pulse rate, typically in the range 1-10Hz. The ringdown on the other hand is intrinsic to the transducer element, and independent of the position of neighbouring tissue, and will change due to resonant properties, caused predominantly by small temperature drifts. These changes occur over time-scales of several minutes, and thus are of a significantly different time-scale to the time-scale of echo variation, which latter variation is illustrated in Figure 2.

Thus the reference scan can be updated by taking a relatively long term running average which can be expressed in the following mathematical terms.

$$R_i(t) = Average \ (A_i(t))$$

$$= \alpha A_i(t) + (1-\alpha)R_{i-1}(t) \qquad\qquad (Equation \ 8)$$

and this running average can be subtracted from the current A-scan to remove the ringdown.

$$P_i(t) = A_i(t) - \{\alpha A_i(t) + (1-\alpha)R_{i-1}(t)\} \qquad\qquad (Equation \ 9)$$

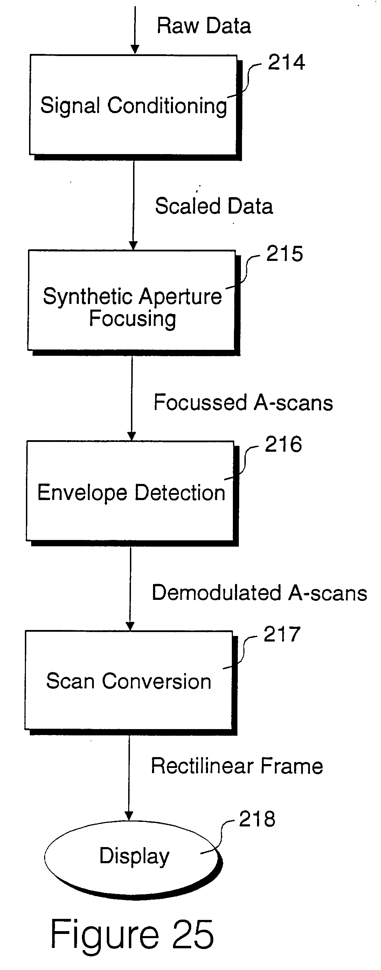

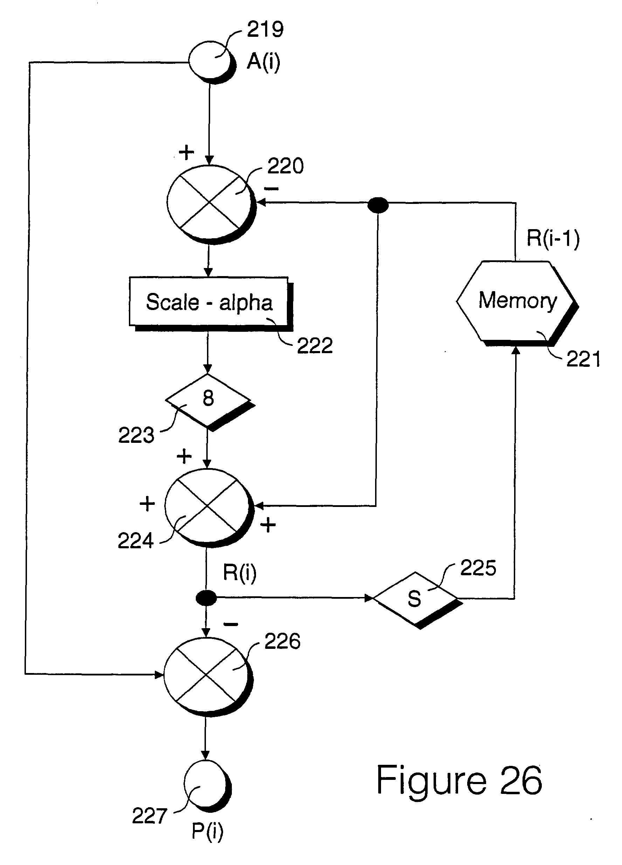

How this method can be implemented is shown diagrammatically in Figure 25 and 26.

The processing of the ultrasound pulses can be considered as a pipeline of four main stages as shown in Figure 25.

The first stage 214 is signal conditioning, such as d.c. correction, normalisation and digital filtering.

The second stage 215 is combining channels to perform synthetic aperture focusing.

The third stage 216 is envelope detection, to extract tissue reflectivity from the ultrasound radio-frequency carrier.

The fourth stage 217 is scan conversion, to convert the radial information to a form suitable for display on a conventional rectilinear or rastor display device 218, including interpolation between rays as appropriate.

In our UK Patent Nos 2,233,094 and 2,268,806, equipment to perform this processing is disclosed, based on a high-performance workstation. Our copending Patent Application No. 9418630 also discloses equipment to perform this processing in a dedicated parallel digital signal processing card, prior to steps 216 and 217 of Figure 25 which are performed in the host workstation.

Figure 26 discloses how the recursive algorithms of Equation 9 can be implemented as a recursive filter, which can be inserted into the pipeline of Figure 25. The filter consists of three adder units 220, 224, 226, a memory 221, and a multiplier unit 222. There is one filter for each data point in a frame of data. This filter can be inserted at any stage in the processing pipeline of Figure 25, the most efficient implementations are when the data is at the minimum size, which is before scan conversion, either just after focusing or after demodulation, at points A & B in Figure 25.

The filter can be implemented in digital hardware using known circuit components. In the preferred implementation it is implemented by the central Processing Unit of the workstation 112 of Figure 18 under stored program control. This has the advantage that the parameter $\alpha$, which determines how the filter separates variations of different timescales, can be changed readily. In one implementation the parameter $\alpha$ can be set automatically, by evaluating the frequency components of motion.

First a spectral analysis of the temporal frequency components is obtained (Equation 9). The parameter $\alpha$ is then set to discriminate between the low frequency components associated with ringdown, and the high frequency components associated with motion, using a suitable algorithm.

The preferred algorithm is to search for the frequency $F_1$ at which the power spectrum falls below a certain threshold, and the frequency $F_2$ at which it rises above that threshold. The discriminating frequency $F_\alpha$ is set at the arithmetic mean of $F_1$ and $F_2$.

In certain circumstances it is an advantage to stop the updating of the ringdown signal, for example, in cases when the time dependence of the echo signals is similar to that of the ringdown signal. One such case is when the updating can then be interrupted by interrupting the data flow at the two points 223 and 225 in Figure 26. This situation is closer to that of the simple subtraction of a fixed reference signal as in Equation 7. The difference is that the reference signal was obtained by a process of running average, not by a single scan in an echo-free zone.

The ability to be able to interrupt the updating of the reference scan is valuable in the use of preventing erroneous data being fed into the reference scan, for example, when the transducer is being moved into position, and spends long periods against a vessel wall. In these circumstances the vessel wall signal will be only slowly varying, and will be added to the references scan. Interrupting the updating prevents this artifact occurring during positioning of the transducer.

The updating of the reference scan normally starts from zero, and so a significant number of frames are required for the contents of the reference scan to approach the ringdown only signal. In another implementation of this technique an echo free signal is obtained in a suitable large vessel and fed into the long-term memory to act as a initialisation condition, and then updating is continued by the method described.

**Claims**

1. An ultrasonic visualisation apparatus comprising:

   a transducer array (**310**) having a plurality of transducer elements for transmitting ultrasound pulses and for receiving echo pulses in response thereto;
   control means (**30**) for controlling the order in which the transducer elements are energised and the order in which the transducer elements receive an echo pulse so as to carry out the energisation and reception sequentially:

      means for sequentially acquiring the data in analogue form for a whole aperture and for processing the data for beam formation in correspondence with an analogue echo pulse received by each transducer element, said means for acquiring and processing including means (**40**) for converting the analogue echo signals to digital signals;
      means for storing the data of said digital signals;
      beam-forming means (**50**) supplied with said data digital signals and providing an output; and
      display means (**50**) for displaying an output from the beam-forming means; **characterised by**:

         said transduces array being mounted on a distal end of a catheter;
         means for energising each single transducer element of the transducer array to generate an ultrasonic pulse, and for receiving echo signals from at least two transducer elements of the transducer array, so that data used to create an image of the echo signals comes from said at least two transducer elements, wherein the echo signals result from transmission of an ultrasound pulse from a transducer element of the transducer array other than said two transducer elements of the array.

2. Apparatus as claimed in claim **1**, in which there are means for post-processing the stored data for inputting to the beam-forming means.

3. Apparatus as claimed in claim **1** or **2**, including a multiplexer (**20**) electrically connected between the transducer array (**10**) and the said control means (**30**).

4. Apparatus as claimed in claim **3**, in which the multiplexer (**20**) has means for selecting all available cross-products within each aperture where each cross-product is data corresponding to an echo signal received by one transducer element that was transmitted by that of another transducer element.

5. Apparatus as claimed in claim **3**, wherein the multiplexer (**20**) has means for selecting less than all available cross-products within each aperture where each cross-product is data corresponding to an echo signal received by one transducer element that was transmitted by that of another transducer element.

6. Apparatus as claimed in claim **4** or claim **5**, including a symmetric data combiner means of combining digital signals.

7. Apparatus as claimed in claim **1**, having a plurality of analogue to digital converters (**40a** to **40d**) to convert the analogue echo signals from the multiplexer (**20**) into digital signals.

8. Apparatus as claimed in claim **6,** wherein the symmetric data combining means (**50**) comprises a FIFO memory (**52**) and a programmable adder (**51**).

9. Apparatus as claimed in any previous claim, including:

   master digital signal process means (**60**) and slave digital signal processor means (**62**) for storing the data of said digital signals, the master digital signal processor means comprising a plurality of master digital signal processors; and
   means for enabling each said master digital signal processor to process only a fraction of a range of data so that parallel processing of the data can be carried out.

10. Apparatus as claimed in any previous claim, including:

    high speed cache memory means (**90**) for storing data process by said means for acquiring and processing; and
    means for loading filter coefficients into the high speed cache memory means.

11. Apparatus as claimed in claim **1**, wherein the means for acquiring sequentially the data in analogue form for a whole aperture and for processing the data for beam information in correspondence with an analogue echo pulse received by each transducer element is without delaying said data and said means for acquiring and processing includes an optimisation process means for the generation of filter coefficients.

12. Apparatus as claimed in any previous claim, including:

    a plurality of signal lines (**101**) which is less in number than the number of transducer elements; and
    means for simultaneously switching one signal line to one said transmitting element and another signal line to one said receiving element so that transmission and reception can take place on different transducer elements during each acquisition without switching between the transmitting phase and a reception phase.

13. Apparatus as claimed in any previous claims, including:

    beam forming means supplied with an output from the means for converting and comprising master digital signal processor means (**61**) and slave digital processor means (**62**); and
    display means (**80**) for displaying an output from the beam-forming means.

14. Apparatus as claimed in any previous claim, wherein the control means (**30**) for controlling the order in which the transducer elements are energised and the order in which the transducer elements receive an echo pulse is such that the energisation and reception is carried out sequentially without switching between the transmitting phase and the reception phase between each acquisition.

**15.** A method of operating a catheter based ultrasonic visualisation apparatus comprising the steps of:

transmitting ultrasound pulses by means of a transducer array having a plurality of transducer elements and mounted on a distal end of the catheter;

energising each said transducer element of the array in turn to cause generation of an ultrasound pulse;

receiving echo signals from at least two transducer elements of the array, the echo signals resulting from transmission of an ultrasound pulse from a transducer element of the transducer array other than said two transducer elements of the array;

controlling the order in which the transducer elements are energised and the order in which the transducer elements receive an echo pulse, so as to carry out the energisation and reception sequentially without switching between a transmitting phase and a reception phase during each acquisition;

acquiring sequentially the data in analogue form for a whole aperture; and

processing the acquired data for beam formation in correspondence with an analogue echo pulse received by each transducer element without delaying said data, said step of processing including the steps of:

converting the analogue echo signals to digital signals;

storing the data of said signals;

processing said converted signals by beam forming means; and

displaying an output from the beam forming means.

**16.** A method as claimed in claim **15,** including the step of post-processing the stored data prior to the beam-forming step.

**17.** A method as claimed in claims **15** or **16,** including multiplexing outputs from the transducer array.

**18.** A method as claimed in claim **17**, wherein all available cross-products are selected within each aperture where each cross-product is data corresponding to an echo signal received by one transducer element that was transmitted by that of another transducer element.

**19.** A method as claimed in claim **17**, wherein less than all available cross products are selected within each aperture, where each cross-product is data corresponding to an echo signal received by one transducer element that was transmitted by that of another transducer element.

**20.** A method as claimed in claims **18** or **19**, wherein the digital signals are combined symmetrically.

**21.** A method as claimed in claim **17,** including converting each of the analogue signals from the multiplexer into digital signals by using a plurality of analogue to digital converters.

**22.** A method as claimed in claim **20**, wherein the symmetrical data combining means is effected using a FIFO memory and a programmable adder.

**23.** A method as claimed in any one of claims **15** to **22**, including the steps of

storing the data of said digital signals using

master digital signal processor means and slave digital signal processor means, the master digital signal processor means comprising a plurality of master digital signal processors; and

processing only a fraction of a range of data so that parallel processing of the data can be carried out.

**24.** A method as claimed in any of claims **15** to **23** including the steps of :

storing data processed by said means for acquiring and processing in a high speed cache memory ; and

loading filter coefficients into the high speed cache memory means.

**25.** A method as claimed in claim **15**, wherein the step of generating the filter coefficients by means of an optimisation process

**26.** A method as claimed in any of claims **15** to **25**, including the steps of:

selecting a plurality of signal lines which is less in number than the number of transducer elements; and simultaneously switching one signal line to one said transmitting element and another signal line to one said receiving element so that transmission and reception can take place on different transducer elements during each acquisition without switching between the transmitting phase and a reception phase.

27. A method as claimed in any of claims **15** to **26**, including the steps of forming a beam from the output from the means for converting and
displaying an output from the beam-forming means.

28. A method as claimed in any of claims **15** to **27** including the step of carrying out sequentially, without switching between the transmitting phase and the reception phase between each acquisition, the energisation and reception.

**Patentansprüche**

1. Ultraschall-Visualisierungsvorrichtung mit:

einem Wandlerarray (310) mit mehreren Wandlerelementen zum Senden von Ultraschallimpulsen und zum Empfangen von Echoimpulsen in Reaktion darauf;

einer Steuereinrichtung (30) zum Steuern der Reihenfolge, in der die Wandlerelemente angesteuert werden, und der Reihenfolge, in der die Wandlerelemente einen Echoimpuls empfangen, um das Ansteuern und Empfangen sequentiell durchzuführen;

einer Einrichtung zum sequentiellen Erfassen der Daten in analoger Form für eine ganze Blendenöffnung und zum Verarbeiten von Daten für eine Strahlformung in Übereinstimmung mit einem von jedem Wandlerelement empfangenen Echoimpuls, wobei die Einrichtung zum Erfassen und Verarbeiten eine Einrichtung (40) zum Konvertieren der analogen Echosignale in digitale Signale aufweist;

einer Einrichtung zum Speichern von Daten der digitalen Signale;

einer Strahlformungseinrichtung (50), die mit den Daten der digitalen Signale versorgt wird und ein Ausgangssignal erzeugt; und

einer Anzeigeeinrichtung (50) zum Anzeigen eines Ausgangssignals von der Strahlformungseinrichtung;

**gekennzeichnet durch**
das Anordnen des Wandlerarrays an einem distalen Ende eines Katheters;
eine Einrichtung zum Ansteuern jedes einzelnen Wandlerelements des Wandlerarrays zum Erzeugen eines Ultraschallimpulses und zum Empfangen von Echosignalen von mindestens zwei Wandlerelementen des Wandlerarrays, so dass zum Erzeugen eines Bildes verwendete Daten von den mindestens zwei Wandlerelementen kommen, wobei die Echosignale aus dem Senden eines Ultraschallimpulses von einem anderen Wandlerelement des Wandlerarrays als den beiden Wandlerelementen des Arrays resultieren.

2. Vorrichtung nach Anspruch 1, mit einer Einrichtungen zum Nachverarbeiten der gespeicherten Daten zur Eingabe in die Strahlformungseinrichtung.

3. Vorrichtung nach Anspruch 1 oder 2, mit einem elektrisch zwischen dem Wandlerarray (10) und der Steuereinrichtung (30) geschalteten Multiplexer (20).

4. Vorrichtung nach Anspruch 3, bei der der Multiplexer (20) eine Einrichtung zum Auswählen sämtlicher verfügbaren Kreuzprodukte in jeder Blendenöffnung aufweist, wobei es sich bei jedem Kreuzprodukt um Daten handelt, die einem von einem Wandlerelement empfangenen Echosignal entsprechen, das von einem anderen Wandlerelement gesendet worden ist.

5. Vorrichtung nach Anspruch 3, bei der der Multiplexer (20) eine Einrichtung zum Auswählen von weniger als sämtlicher verfügbaren Kreuzprodukte in jeder Blendenöffnung aufweist, wobei es sich bei jedem Kreuzprodukt um Daten handelt, die einem von einem Wandlerelement empfangenen Echosignal entsprechen, das von einem anderen Wandlerelement gesendet worden ist.

6. Vorrichtung nach Anspruch 4 oder 5, mit einer Einrichtung zum symmetrischen Kombinieren von Daten zum Kombinieren von digitalen Signalen.

7. Vorrichtung nach Anspruch 1, mit mehreren Analog-Digital-Konvertern (40a bis 40d) zum Konvertieren der analogen Echosignale von dem Multiplexer (20) in digitale Signale.

8. Vorrichtung nach Anspruch 6, bei der die Einrichtung (50) zum symmetrischen Kombinieren von Daten einen FIFO-Speicher (52) und eine programmierbare Addiereinrichtung (51) aufweist.

9. Vorrichtung nach einem der vorhergehenden Ansprüche, mit:

   einer Master-Digitalsignal-Prozessoreinrichtung (60) und einer Slave-Digitalsignal-Prozessoreinrichtung (62) zum Speichern von Daten der digitalen Signale, wobei die Master-Digitalsignal-Prozessoreinrichtung mehrere Master-Digitalsignalprozessoren aufweist; und

   einer Einrichtung zum Befähigen jedes Master-Digitalsignalprozessors zum Verarbeiten nur eines Teils eines Datenbereichs, so dass eine parallele Verarbeitung der Daten erfolgen kann.

10. Vorrichtung nach einem der vorhergehenden Ansprüche, mit:

    einer Hochgeschwindigkeits-Cachespeichereinrichtung (90) zum Speichern von von der Einrichtung zum Erfassen und Verarbeiten verarbeiteten Daten; und
    einer Einrichtung zum Laden von Filterkoeffizienten in die Hochgeschwindigkeits-Cachespeichereinrichtung.

11. Vorrichtung nach Anspruch 1, bei der die Einrichtung zum sequentiellen Erfassen der Daten in analoger Form für eine ganze Blendenöffnung und zum Verarbeiten der Daten für die Strahlformung in Übereinstimmung mit einem von jedem Wandlerelement empfangenen Echoimpuls keine Datenverzögerung aufweist und die Einrichtung zum Erfassen und Verarbeiten eine Verarbeitungsoptimiereinrichtung zum Erzeugen von Filterkoeffizienten aufweist.

12. Vorrichtung nach einem der vorhergehenden Ansprüche, mit:

    mehreren Signalleitungen (101), deren Anzahl kleiner ist als die Anzahl von Wandlerelementen; und

    einer Einrichtung zum gleichzeitigen Umschalten einer Signalleitung auf ein Sendeelement und einer anderen Signalleitung auf ein Empfangselement, so dass das Senden und Empfangen an unterschiedlichen Wandlern erfolgen kann, ohne dass bei jeder Erfassung zwischen der Sendephase und einer Empfangsphase umgeschaltet wird.

13. Vorrichtung nach einem der vorhergehenden Ansprüche, mit:

    einer Strahlformungseinrichtung, die mit einem Ausgangssignal von der Einrichtung zum Konvertieren versorgt wird und eine Master-Digitalsignal-Prozessoreinrichtung (61) und eine Slave-Digital-Prozessoreinrichtung (62) aufweist; und

    einer Anzeigeeinrichtung (80) zum Anzeigen eines Ausgangssignals von der Strahlformungseinrichtung.

14. Vorrichtung nach einem der vorhergehenden Ansprüche, bei der die Steuereinrichtung (30) zum Steuern der Reihenfolge, in der die Wandlerelemente angesteuert werden, und der Reihenfolge, in der die Wandlerelemente einen Echoimpuls empfangen, derart konfiguriert ist, dass das Ansteuern und Empfangen sequentiell erfolgen, ohne dass zwischen jeder Erfassung zwischen der Sendephase und der Empfangsphase umgeschaltet wird.

15. Verfahren zum Bedienen einer auf einem Katheter basierenden Ultraschall-Visualisierungsvorrichtung, mit folgenden Schritten:

    Senden von Ultraschallimpulsen unter Verwendung eines Wandlerarrays, das mehrere Wandlerelemente aufweist und an einem distalen Ende des Katheters angeordnet ist;

sequentielles Ansteuern jedes Wandlerelements des Arrays, um das Erzeugen eines Ultraschallimpulses zu bewirken;

Empfangen von Echosignalen von mindestens zwei Wandlerelementen des Arrays, wobei die Echosignale aus dem Senden eines Ultraschallimpulses von einem anderen Wandlerelement des Wandlerarrays als den beiden Wandlerelementen des Arrays resultieren;

Steuern der Reihenfolge, in der die Wandlerelemente angesteuert werden, und der Reihenfolge, in der die Wandlerelemente einen Echoimpuls empfangen, um das Ansteuern und Empfangen sequentiell durchzuführen, ohne dass bei jeder Erfassung zwischen einer Sendephase und einer Empfangsphase umgeschaltet wird;

sequentielles Erfassen der Daten in analoger Form für eine ganze Blendenöffnung; und

Verarbeiten der erfassten Daten für eine Strahlformung in Übereinstimmung mit einem analogen Echoimpuls, der von jedem Wandlerelement empfangen wird, ohne dass eine Datenverzögerung erfolgt, wobei der Schritt des Verarbeitens folgende Schritte umfasst:

Konvertieren der analogen Echosignale in digitale Signale;

Speichern der Daten der Signale;

Verarbeiten der konvertierten Signale durch die Strahlformungseinrichtung; und

Anzeigen eines Ausgangssignals von der Strahlformungseinrichtung.

16. Verfahren nach Anspruch 15, mit dem Schritt des Nachverarbeitens der gespeicherten Daten vor dem Strahlformungsschritt.

17. Verfahren nach Anspruch 15 oder 16, mit dem Schritt des Multiplexens von Ausgangssignalen von dem Wandlerarray.

18. Verfahren nach Anspruch 17, bei dem sämtliche verfügbaren Kreuzprodukte in jeder Blendenöffnung ausgewählt werden, wobei es sich bei jedem Kreuzprodukt um Daten handelt, die einem von einem Wandlerelement empfangenen Echosignal entsprechen, das von einem anderen Wandlerelement gesendet worden ist.

19. Verfahren nach Anspruch 17, bei dem weniger als sämtliche verfügbaren Kreuzprodukte in jeder Blendenöffnung ausgewählt werden, wobei es sich bei jedem Kreuzprodukt um Daten handelt, die einem von einem Wandlerelement empfangenen Echosignal entsprechen, das von einem anderen Wandlerelement gesendet worden ist.

20. Verfahren nach Anspruch 18 oder 19, bei dem die digitalen Signale symmetrisch kombiniert werden.

21. Verfahren nach Anspruch 17, mit dem Schritt des Konvertieren jedes analogen Signals von dem Multiplexer in digitale Signale unter Verwendung mehrerer Analog-Digital-Konverter.

22. Verfahren nach Anspruch 20, bei dem die Einrichtung zum symmetrischen Kombinieren von Daten einen FIFO-Speicher und eine programmierbare Addiereinrichtung aufweist.

23. Verfahren nach einem der Ansprüche 15 bis 22, mit folgenden Schritten:

Speichern der Daten der digitalen Signale unter Verwendung einer Master-Digitalsignal-Prozessoreinrichtung und einer Slave-Digitalsignal-Prozessoreinrichtung, wobei die Master-Digitalsignal-Prozessoreinrichtung mehrere Master-Digital-Signalprozessoren aufweist; und

Verarbeiten nur eines Teils eines Datenbereichs, so dass eine parallele Verarbeitung der Daten erfolgen kann.

24. Verfahren nach einem der Ansprüche 15 bis 23, mit folgenden Schritten:

Speichern von durch die Einrichtung zum Erfassen und Verarbeiten verarbeiteten Daten in einem Hochgeschwindigkeits-Cachespeicher; und

Laden von Filterkoeffizienten in die Hochgeschwindigkeits-Cachespeichereinrichtung.

**25.** Verfahren nach Anspruch 15, mit dem Schritt des Erzeugens der Filterkoeffizienten unter Anwendung eines Optimierungsprozesses.

**26.** Verfahren nach einem der Ansprüche 15 bis 25, mit folgenden Schritten:

Auswählen mehrerer Signalleitungen, deren Anzahl kleiner ist als die Anzahl von Wandlerelementen; und

gleichzeitiges Umschalten einer Signalleitung auf ein Sendeelement und einer anderen Signalleitung auf ein Empfangselement, so dass das Senden und Empfangen an unterschiedlichen Wandlerelementen erfolgen kann, ohne dass bei jeder Erfassung zwischen der Sendephase und einer Empfangsphase umgeschaltet wird.

**27.** Verfahren nach einem der Ansprüche 15 bis 26, mit den Schritten des Formens eines Strahls aus dem Ausgangssignal von der Einrichtung zum Konvertieren und Anzeigen eines Ausgangssignals von der Strahlformungseinrichtung.

**28.** Verfahren nach einem der Ansprüche 15 bis 27, mit dem Schritt des sequentiellen Durchführens des Ansteuerns und Empfangens, ohne dass zwischen jeder Erfassung zwischen der Sendephase und der Empfangsphase umgeschaltet wird.

**Revendications**

**1.** Appareil de visualisation ultrasonore comprenant :

une rangée de transducteurs (310) possédant une pluralité d'éléments de transducteurs pour transmettre des impulsions ultrasonores et pour recevoir des imposions d'écho en réponse à celles-ci ;
des moyens de commande (30) pour contrôler l'ordre dans lequel les éléments de transducteurs sont alimentés et l'ordre dans lequel les éléments de transducteurs reçoivent une impulsion d'écho de manière à effectuer l'alimentation et la réception de manière séquentielle ;
des moyens pour acquérir séquentiellement les données sous forme analogique pour une ouverture totale et pour traiter les données pour une formation de faisceau en correspondance avec une impulsion d'écho analogique reçue par chaque élément de transducteur, lesdits moyens d'acquisition et de traitement comprenant des moyens (40) pour convertir les signaux d'écho analogiques en signaux numériques ;
des moyens pour stocker les données desdits slgnaux numériques ;
des moyens de formation de faisceau (50) alimentés avec lesdits signaux de données numériques et fournissant un résultat ; et
des moyens d'affichage (50) pour afficher un résultat issu des moyens de formation de falsceau ; **caractérisé par** :

ladite rangée de transducteurs étant montée sur une extrémité distale d'un moyen de cathéter pour alimenter chaque élément de transducteur de la rangée de transducteurs afin de générer une impulsion ultrasonore, et pour recevoir des signaux d'écho de la part d'au moins deux éléments de transducteur de la rangée de transducteurs, de telle sorte que les données utillsées pour créer une image des signaux d'écho proviennent desdits deux éléments de transducteur au moins, dans lequel les signaux d'écho proviennent de la transmission d'une impulsion ultrasonore issue d'un élément de transducteur de la rangée de transducteurs autre que lesdits deux éléments de transducteur de la rangée.

**2.** Appareil selon la revendication 1, dans lequel il existe des moyens pour post-traiter les données stockées devant être transmises aux moyens de formation de faisceau.

**3.** Appareil selon la revendication 1 ou 2, comprenant un multiplexeur (20) électriquement relié entre la rangée de transducteurs (10) et lesdits moyens de commande (30).

**4.** Appareil selon la revendication 3, dans lequel le multiplexeur (20) possède des moyens pour sélectionner l'ensemble des produits d'intermodulation disponibles au sein de chaque ouverture où chaque produit d'intermodulation est mis en correspondance en termes de données avec un signal d'écho reçu par un élément de transducteur qui a été transmis par celui d'un autre élément de transducteur.

5.  Appareil selon la revendication 3, dans lequel le multiplexeur (20) possède des moyens pour sélectionner moins que l'ensemble des produits d'intermodulation disponibles au sein de chaque ouverture où chaque produit d'intermodulation est mis en correspondance en termes de données avec un signal d'écho reçu par un élément de transducteur qui a été transmis par celui d'un autre élément de transducteur.

6.  Appareil selon la revendication 4 ou la revendication 5, comprenant des moyens de combinaison de données symétriques combinant des signaux numériques.

7.  Apparell selon la revendication 1, possédant une pluralité de convertisseurs analogique/numérique (40a à 40d) pour convertir les signaux d'écho analogiques issus du multiplexeur (20) en signaux numériques.

8.  Appareil selon la revendication 6, dans lequel les moyens de combinaison de données symétriques (50) comprennent une mémoire FIFO (52) et un additionneur programmable (51).

9.  Appareil selon l'une quelconque des revendications précédentes, comprenant :

    des moyens de traitement de signaux numériques maîtres (60) et des moyens de traitement de signaux numériques esclaves (62) pour stocker les données desdits signaux numériques, les moyens de traitement de signaux numériques maîtres comprenant une pluralité de processeurs de signaux numériques maîtres ; et des moyens pour permettre à chacun desdits processeurs de signaux numériques maîtres de traiter uniquement une fraction d'une gamme de données de telle sorte qu'un traitement parallèle des données puisse être effectué.

10. Appareil selon l'une quelconque des revendications précédentes, comprenant :

    des moyens de mémoire cache à grande vitesse (90) pour stocker les données traitées par lesdits moyens d'acquisition et de traitement ; et des moyens pour charger des coefficients de filtre dans les moyens de mémoire cache à grande vitesse.

11. Appareil selon la revendication 1, dans lequel les moyens pour acquérir séquentiellement les données sous forme analogique pour une ouverture entière et pour traiter les données pour la formation de faisceau en correspondance avec une impulsion d'écho analogique reçue par chaque élément de transducteur sont dépourvus de retard desdites données, et dans lequel les moyens d'acquisition et de traitement comprennent un moyen de processus d'optimisation pour la génération de coefficients de filtre.

12. Appareil selon l'une quelconque des revendications précédentes, comprenant ;

    une pluralité de lignes de signaux (101) qui sont moins nombreuses que le nombre d'éléments de transducteur ; et des moyens pour commuter simultanément une ligne de signal à l'un desdits éléments de transducteur et une autre ligna de signal à l'un desdits éléments de réception de telle sorte qu'une transmission et une réception puissent avoir lieu sur différents éléments de transducteur pendant chaque acquisition sans effectuer de commutation entre la phase de transmission et une phase de réception.

13. Appareil selon l'une quelconque des revendications précédentes, comprenant :

    des moyens de formation de faisceau alimentés avec un résultat issu des moyens de conversion, et comprenant des moyens de traitement de signaux numériques maîtres (61) et des moyens de traitement de signaux numériques esclaves (62) ; et des moyens d'affichage (80) pour afficher un résultat issu des moyens de formation de faisceau.

14. Appareil selon l'une quelconque des revendications précédentes, dans lequel les moyens de commande (30) pour contrôler l'ordre dans lequel les éléments de transducteur sont alimentés et l'ordre dans lequel les éléments de transducteur reçoivent une impulsion d'écho sont tels que l'alimentation et la réception sont effectuées séquentlellement sans commutation entre la phase de transmission et la phase de réception entre chaque acquisition.

15. Procédé d'exploitation d'un appareil de visualisation ultrasonore basé sur un cathéter, comprenant les étapes consistant à :

> transmettre des impulsions ultrasonores à l'aide d'une rangée de transducteurs possédant une pluralité d'éléments de transducteur et montée sur une extrémité distale du cathéter ;
> alimenter chacun desdits éléments de transducteur de la rangée afin de provoquer une génération d'impulsion ultrasonore ;
> recevoir des signaux d'écho de la part d'au moins deux éléments de transducteur de la rangée, les signaux d'écho résultant de la transmission d'une impulsion ultrasonore issue d'un élément de transducteur de la rangée de transducteurs autre que lesdits deux éléments de transducteur de la rangée ;
> contrôler l'ordre dans lequel les éléments de transducteur sont alimentés et l'ordre dans lequel les éléments de transducteur reçoivent une impulsion d'écho, de manière à effectuer l'alimentation et la réception de manière séquentielle sans commutation entre une phase de transmission et une phase de réception pendant chaque acquisition ;
> acquérir séquentiellement les données sous forme analogique pour une ouverture entière ; et
> traiter les données acquises pour la formation de faisceau en correspondance avec une impulsion d'écho analogique reçue par chaque élément de transducteur sans retarder lesdites données, ladite étape de traitement comprenant les étapes consistant à :
>
>> convertir les signaux d'écho analogiques en signaux numériques ;i
>> stocker les données desdits signaux ;
>> traiter lesdits signaux convertis à l'aide des moyens de formation de faisceau ; et
>> afficher un résultat issu des moyens de formation de faisceau.

16. Procédé selon la revendication 15, comprenant l'étape de post-traitement des données stockées avant l'étape de formation de faisceau.

17. Procédé selon les revendications 15 ou 16, comprenant le multiplexage des résultats issus de la rangée de transducteurs.

18. Procédé selon la revendication 17, dans lequel tous les produits d'intermodulation disponibles sont sélectionnés au sein de chaque ouverture où chaque produit d'intermodulation est mis en correspondance en termes de données avec un signal d'écho reçu par un élément de transducteur qui a été transmis par celui d'un autre élément de transducteur.

19. Procédé selon la revendication 17, dans lequel moins que l'ensemble des produits d'intermodulation disponibles est sélectionné au sein de chaque ouverture, où chaque produit d'intermodulation est mis en correspondance en termes de données avec un signal d'écho reçu par un élément de transducteur qui a été transmis par celui d'un autre élément de transducteur.

20. Procédé selon les revendications 18 ou 19, dans lequel les signaux numériques sont combinés symétriquement.

21. Procédé selon la revendication 17, comprenant la conversion de chacun des signaux analogiques issus du multiplexeur en signaux numériques, en utilisant une pluralité de convertisseurs analogique/numérique.

22. Procédé selon la revendication 20, dans lequel les moyens de combinaison de données symétriques sont réalisés en utilisant une mémoire FIFO et un additionneur programmable.

23. Procédé selon l'une quelconque des revendications 15 à 22, comprenant les étapes consistant à
> stocker les données desdits signaux numériques en utilisant
> des moyens de traitement de signaux numériques maîtres et des moyens de traitement de signaux numériques esclaves, les moyens de traitement de signaux numériques maîtres comprenant une pluralité de processeurs de signaux numériques maîtres ; et
> traiter uniquement une fraction d'une gamme de données de telle sorte qu'un traitement parallèle des données puisse être effectué.

**24.** Procédé selon l'une quelconque des revendications 15 à 23 comprenant les étapes consistant à :

stocker les données traitées par lesdits moyens d'acquisition et de traitement dans une mémoire cache à grande vitesse ; et
charger des coefficients de filtre dans les moyens de mémoire cache à grande vitesse.

**25.** Procédé selon la revendication 15, dans lequel l'étape de génération des coefficients de filtre est effectuée à l'aide d'un processus d'optimisation.

**26.** Procédé selon l'une quelconque des revendications 15 à 25, comprenant les étapes consistant à :

sélectionner une pluralité de lignes de signaux qui sont moins nombreuses que le nombre d'éléments de transducteur ; et
commuter simultanément une ligne de signal à l'un desdits éléments de transmission et une autre ligne de signal à l'un desdits éléments de réception de telle sorte qu'une transmission et une réception puissent avoir lieu sur différents éléments de transducteur pendant chaque acquisition sans commutation entre la phase de transmission et une phase de réception.

**27.** Procédé selon l'une quelconque des revendications 15 à 26, comprenant les étapes consistant à former un faisceau à partir du résultat issu des moyens de conversion et à afficher un résultat issu des moyens de formation de faisceau.

**28.** Procédé selon l'une quelconque des revendications 15 à 27, comprenant l'étape consistant à effectuer séquentiellement, sans commutation entre la phase de transmission et la phase de réception entre chaque acquisition, l'allmentation et la réception.

EP 0 702 247 B1

*Fig.1*

SAFT : Classical Catheter Size : 2.9 F
Frequency : 30.0 MHz
Number of Elements : 64

Kerf Width : 10.0 um
Transmit Channels : 1
Receive Channels : 1
Aperture Width : 7

# Fig. 2

Lateral Displacement in mm

6 dB Beam Width: 0.25mm    20 dB Beam Width: 2.98mm

SAFT : Multiple Element
        Catheter Size : 2.9 F
Frequency : 30.0 MHz
Number of Elements : 64

Kerf Width : 10.0 um
Transmit Channels : 3
Receive Channels : 3
Aperture Width :   3

# Fig. 3

Lateral Displacement in mm

6 dB Beam Width: 0.52mm     20 dB Beam Width: 1.89mm

SAFT : Cross Product
          Catheter Size : 2.9 F
Frequency : 30.0 MHz
Number of Elements : 64

Kerf Width : 10.0 um
Transmit Channels : 1
Receive Channels : 1
Aperture Width :    7

## Fig. 4

Lateral Displacement in mm

6 dB Beam Width: 0.34mm       20 dB Beam Width: 0.58mm

SAFT : Cross Product
Catheter Size : 2.9 F
Frequency : 30.0 MHz
Number of Elements : 64

Kerf Width : 10.0 um
Transmit Channels : 1
Receive Channels : 1
Aperture Width : 7

## Fig. 5

Lateral Displacement in mm

6 dB Beam Width: 0.33mm    20 dB Beam Width: 0.53mm

SAFT : Cross Product
        Catheter Size : 2.9 F
Frequency : 30.0 MHz
Number of Elements : 64

Kerf Width : 10.0 um
Transmit Channels : 1
Receive Channels :  1
Aperture Width :    7

## Fig. 6

Lateral Displacement in mm

6 dB Beam Width: 0.30mm     20 dB Beam Width: 0.89mm

SAFT : Cross Product
        Catheter Size : 2.9 F
Frequency : 30.0 MHz
Number of Elements : 64

Kerf Width : 10.0 um
Transmit Channels : 1
Receive Channels : 1
Aperture Width :    7

## Fig. 7

Lateral Displacement in mm

6 dB Beam Width: 0.45mm      20 dB Beam Width: 0.89mm

*Fig. 8*

Multiplexer architecture
Shift register containing
control bits for switches

Elements

A

B

C

D

S1

S2

S3

S4

S5

S6

S7

S8

S9

S10

S11

S12

S13

S14

S15

S16

1

2

3

4

5

6

7

8

9

10

11

12

13

14

15

16

## Fig. 9

## 4 elements :- all cross-products are possible

|  | Transmit Channel | | | |
|---|---|---|---|---|
| R e c e i v e | 0 | 1 | 2 | 3 |
| 0 | x | x | x | x |
| 1 | x | x | x | x |
| 2 | x | x | x | x |
| 3 | x | x | x | x |

x - this combination is possible

## 5 elements :- 23 out of 25 cross-products are available

|  | 0 | 1 | 2 | 3 | 4 |
|---|---|---|---|---|---|
| 0 | x | x | x | x | 0 |
| 1 | x | x | x | x | x |
| 2 | x | x | x | x | x |
| 3 | x | x | x | x | x |
| 4 | 0 | x | x | x | x |

## 6 elements :-

|  | 0 | 1 | 2 | 3 | 4 | 5 |
|---|---|---|---|---|---|---|
| 0 | x | x | x | x | 0 | # |
| 1 | x | x | x | x | x | 0 |
| 2 | x | x | x | x | x | x |
| 3 | x | x | x | x | x | x |
| 4 | 0 | x | x | x | x | x |
| 5 | # | 0 | x | x | x | x |

## 7 elements :-

|  | 0 | 1 | 2 | 3 | 4 | 5 | 6 |
|---|---|---|---|---|---|---|---|
| 0 | x | x | x | x | 0 | # | # |
| 1 | x | x | x | x | x | 0 | # |
| 2 | x | x | x | x | x | x | 0 |
| 3 | x | x | x | x | x | x | x |
| 4 | 0 | x | x | x | x | x | x |
| 5 | # | 0 | x | x | x | x | x |
| 6 | # | # | 0 | x | x | x | x |

x - these combinations are possible

0 - these combinations are NOT possible

# - these combinations are possible by re-loading the shift register and may not be possible with a fast frame

## Fig. 10

EP 0 702 247 B1

Fig. 11

● Transmit-receive term
○ Missing term
◉ Cross-Product term

EP 0 702 247 B1

Fig. 12

● Transmit-receive term
○ Missing term
◐ Cross-Product term

Fig. 13

From '10/20'

| Transmit/ receive control | 30 |

ADC 40

B

ALU 51

A

S

FIFO Memory 52

To '60'

Control 53

| LOGIC DIAGRAM | | 54 |
|---|---|
| Control | S |
| 0 | A + B |
| 1 | A |

50

*Fig. 14*

Data Cache — 90

Each Plane represents one range point

80

C P U

| Fi (0,0) |
| Fi (1,0) |
| Fi (2,0) |
| ⋮ |
| Fi (6,6) |
| P(0) |
| ⋮ |
| P(n) |

Vector SAFT Filter Coefficients

Partial Sums

External Memory — 100

Data In →

| Bi (0,0) |
| Bi (1,0) |
| ⋮ |
| Bi (63,63) |
| Di(0) |
| Di(1) |
| ⋮ |
| Di(63) |

Acquire base-band data

complete sums (focused lines)

Data Out ←

# Fig. 15

Fig. 16

COMPLEX FILTER BANK

*Fig. 17*

Figure 18

Figure 19

Figure, 20

# Figure 21

Note:
1. EJECT causes all states to
   return to the "WAITING" state.

EP 0 702 247 B1

Image Acquisition Screen - Bmode control + sequence

2D -> 3D Window

Image Review Window

Bmode Image Window

Fluoroscope Window

Control Column

Bmode menu

Window Level & Field of View Slider controls

Bmode button controls

Bmode sequence Control panel

Bmode control panel

Patient Info

Copyright text

Figure 22

EP 0 702 247 B1

Sequence Capacity Indicator

Sequence Jog Control

≪ FRVS  | | HALT  > PLAY  ≫ FFVD

RECORD  EJECT

Bmode Sequence Control Panel

Figure 23

Frame No.

1

2

3

4

5

6

Ringdown

Echoes

Successive frames of the same A-scan

# Figure 24

Raw Data

Signal Conditioning — 214

Scaled Data

Synthetic Aperture Focusing — 215

Focussed A-scans

Envelope Detection — 216

Demodulated A-scans

Scan Conversion — 217

Rectilinear Frame

Display — 218

Figure 25

Figure 26